(19) Europäisches Patentamt
European Patent Office
Office européen des brevets

(11) **EP 3 536 024 B1**

(12) **EUROPEAN PATENT SPECIFICATION**

(45) Date of publication and mention
of the grant of the patent:
**06.01.2021  Bulletin 2021/01**

(51) Int Cl.:
*H04W 36/00* $^{(2009.01)}$    *H04W 16/28* $^{(2009.01)}$

(21) Application number: **17794443.6**

(22) Date of filing: **30.10.2017**

(86) International application number:
**PCT/SE2017/051063**

(87) International publication number:
**WO 2018/084776 (11.05.2018 Gazette 2018/19)**

(54) **MEASUREMENT REPORT TRIGGERING FOR GROUPS OF REFERENCE SIGNALS**

MESSBERICHTSAUSLÖSUNG FÜR GRUPPEN VON REFERENZSIGNALEN

DÉCLENCHEMENT DE RAPPORT DE MESURE POUR DES GROUPES DE SIGNAUX DE RÉFÉRENCE

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: **04.11.2016  US 201662417853 P**

(43) Date of publication of application:
**11.09.2019  Bulletin 2019/37**

(73) Proprietor: **Telefonaktiebolaget LM Ericsson (PUBL)**
**164 83 Stockholm (SE)**

(72) Inventors:
• **ZETTERBERG, Kristina**
SE-587 52 Linköping (SE)
• **TIDESTAV, Claes**
SE-746 31 Bålsta (SE)
• **DA SILVA, Icaro L. J.**
SE-170 77 Solna (SE)
• **RAMACHANDRA, Pradeepa**
SE-583 32 Linköping (SE)
• **GUNNARSSON, Fredrik**
SE-587 50 Linköping (SE)

(74) Representative: **Ericsson**
**Patent Development**
**Torshamnsgatan 21-23**
**164 80 Stockholm (SE)**

(56) References cited:
**WO-A1-2014/112789    WO-A1-2016/085266**

• **ZTE ET AL: "Beam grouping for beam management", 3GPP DRAFT; R1-1610437 BEAM GROUPING FOR BEAM MANAGEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 10 October 2016 (2016-10-10), XP051160131, Retrieved from the Internet: URL:http://www.3gpp.org/ftp/tsg_ran/WG1_RL 1/TSGR1_86b/Docs/ [retrieved on 2016-10-10]**
• **NOKIA ET AL: "On procedures for beam selection and feedback signaling", 3GPP DRAFT; R1-1610243, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051150262, Retrieved from the Internet: URL:http://www.3gpp.org/ftp/Meetings_3GPP_ SYNC/RAN1/Docs/ [retrieved on 2016-10-09]**
• **ERICSSON: "RRC Measurement report triggering", 3GPP DRAFT; R2-1700859 - RRC MEASUREMENT REPORT TRIGGERING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20170213 - 20170217 12 February 2017 (2017-02-12), XP051211640, Retrieved from the Internet: URL:http://www.3gpp.org/ftp/Meetings_3GPP_ SYNC/RAN2/Docs/ [retrieved on 2017-02-12]**

- ERICSSON: "Filtering of connected mode RSs", 3GPP DRAFT; R2-168729 FILTERING OF CONNECTED MODE RSS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, Nevada, USA; 20161114 - 20161118 13 November 2016 (2016-11-13), XP051178278, Retrieved from the Internet: URL:http://www.3gpp.org/ftp/Meetings_3GPP_ SYNC/RAN2/Docs/ [retrieved on 2016-11-13]
- ERICSSON: "RRC Measurement Reporting in NR", 3GPP DRAFT; R2-168718 RRC MEASUREMENT REPORTING IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, Nevada, USA; 20161114 - 20161118 13 November 2016 (2016-11-13), XP051178268, Retrieved from the Internet: URL:http://www.3gpp.org/ftp/Meetings_3GPP_ SYNC/RAN2/Docs/ [retrieved on 2016-11-13]
- ERICSSON: "Enabling beam grouping by UE in mobility RS measurements", 3GPP DRAFT; R1-1611916_MRS_INCLUDING_CELLID, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, NV, USA; 20161114 - 20161118 13 November 2016 (2016-11-13), XP051175882, Retrieved from the Internet: URL:http://www.3gpp.org/ftp/Meetings_3GPP_ SYNC/RAN1/Docs/ [retrieved on 2016-11-13]

**Description**

TECHNICAL FIELD

The present disclosure relates, in general, to wireless communications and, more particularly, to measurement report triggering for groups of reference signals.

BACKGROUND

In legacy networks, mobility between multiple network nodes (e.g., base stations) in a wireless access network is realized based on wireless device (e.g., user equipment (UE)) measurements on reference signals sent from the serving base station and neighboring base stations. Measurement reports can be sent to the serving base station periodically or based on measurement report triggering events.

For Long Term Evolution (LTE), the measurement report triggering events are specified in 3rd Generation Partnership Project (3GPP) Technical Specification (TS) 36.331 v14.0.0 (2016-09), "Technical Specification, 3rd Generation Partnership Project; Technical Specification Group Radio Access Network; Evolved Universal Terrestrial Radio Access (E-UTRA); Radio Resource Control (RRC); Protocol specification (Release 14)." The intra-Radio Access Technology (RAT) measurement report triggering events are based on measurements on serving (primary and secondary) and neighboring cells (events A1-A6), but also on measurements on Channel State Information Reference Signals (CSI-RS) (Events C1-C2). The events are based on cell reference signal strength and/or quality (or, in the CSI-RS case, the CSI-RS strength and/or quality) becoming better/worse than one or more given threshold(s), or offset better than another cell (or CSI-RS resource). In LTE, the received signal strength is labeled Reference Signal Received Power (RSRP) (cell reference signal) and Channel State Information Reference Signal Received Power, CSI-RSRP (CSI-RS), and the signal quality is labeled Reference Signal Received Quality (RSRQ) or Reference signal-signal to noise and interference ratio, RS-SINR (cell reference signal), and similar for CSI-RS. Once the condition of a measurement report triggering event is fulfilled, the wireless device will send a measurement report to the serving base station, and a handover decision can be taken by the network.

In some of the measurement report triggering events specified for LTE, a Cell Individual Offset (CIO) can be applied in the comparison of reference signal strength and/or quality from the serving and a neighboring cell. This has shown to be beneficial, as different handover conditions can be used towards different neighboring cells.

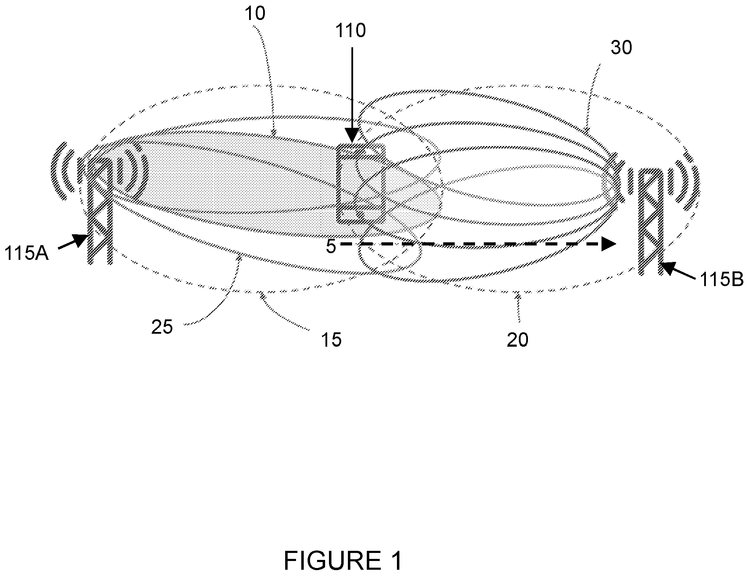

FIGURE 1 illustrates an overview of the downlink (DL) based active mode mobility (AMM) solution proposed for 3GPP 5G New Radio (NR). In the example of FIGURE 1, a wireless device 110 is served by a first network node 115A. To illustrate the proposed solution for DL based AMM in NR, assume that wireless device 110 is traveling in the direction of a second network node 115B (as depicted by dashed arrow 5 in the example of FIGURE 1). Wireless device 110 uses the best "home beam" 10 associated to a reference signal, for example a mobility reference signal (MRS), for coarse timing estimation, radio link quality monitoring (RLM) and failure detection.

In addition, wireless device 110 monitors a sparse periodic MRS 15 (e.g., every 100 ms) from serving node 115A and compares it with similar periodic and sparse MRSs from potential target nodes (e.g., MRS 20 from network node 115B). When a target node (e.g., network node 115B) becomes relevant for a more detailed handover procedure, additional dynamically configured home MRSs (e.g., dynamically configured home MRS 25) and dynamically configured away MRSs (e.g., dynamically configured away MRS 30) may be activated. In certain embodiments, away MRSs 30 may be dynamically triggered.

The final handover decision is taken by the network. The decision is based on wireless device reports containing measurement(s) of home MRSs and away MRSs (e.g., home MRS 25 and away MRS 30 depicted in the example of FIGURE 1).

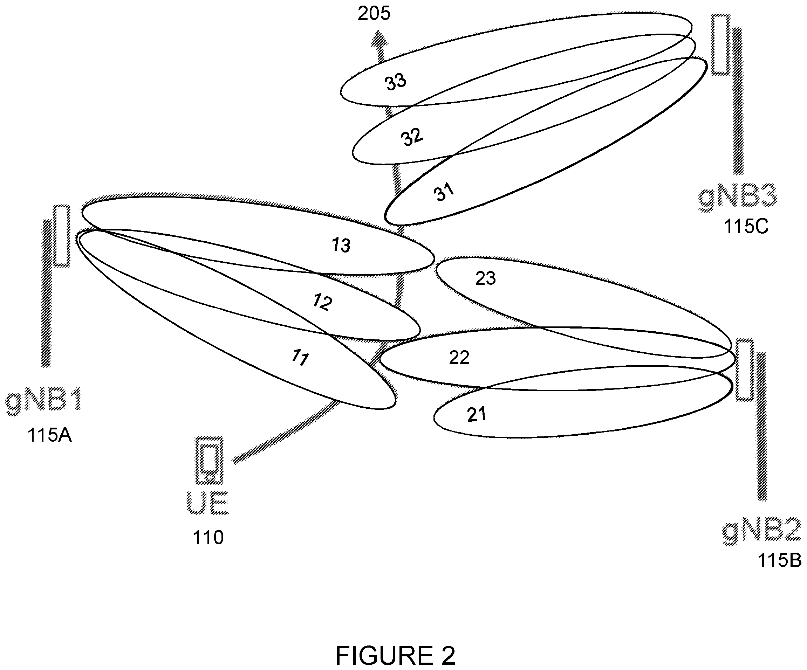

FIGURE 2 illustrates an example of handovers in active mode between different beams. More particularly, FIGURE 2 illustrates per beam handovers of a wireless device 110 (e.g., a UE) between different network nodes 115A, 115B, and 115C (a first, second, and third gNB, respectively, in the example of FIGURE 2). Each network node 115A, 115B, and 115C transmits a plurality of beams. More particularly, network node 115A transmits beams 11, 12, and 13, network node 115B transmits beams 21, 22, and 23, and network node 115C transmits beams 31, 32, and 33. Assume that wireless device 110 is moving along arrow 205 through an area in the vicinity of network nodes 115A, 115B, and 115C. Taking handover decisions based on individual active mode MRS measurements only (i.e., always handing over to the beam with the highest active mode MRS strength and/or quality) would lead to six handovers when wireless device 110 is moving along arrow 205. The six handovers that would result are shown in Table 1 below:

**Table 1: Example of handover decisions based on individual active mode MRS measurements.**

| Handover | - | 1a | 2a | 3a | 4a | 5a | 6a |
|---|---|---|---|---|---|---|---|
| New Serving gNB | 115A | 115B | 115A | 115A | 115C | 115C | 115C |
| New Serving Beam | 11 | 22 | 12 | 13 | 31 | 32 | 33 |

In some cases, there are problems associated with performing handover based on measurements of individual active mode MRSs. One situation in which handover based on individual active mode MRS measurements can be problematic is when the handover decision causes ping-pong between different nodes, as is the case in the example of FIGURE 2. As can be seen from FIGURE 2 and Table 1 above, three inter-network node handovers are made (namely handover 1a, 2a and 4a in Table 1 above). Whereas handover 4a is necessary as wireless device 110 continues moving between beams toward network node 115C (e.g., gNB3), the first two inter-network node handovers 1a and 2a result in a ping-pong between network nodes 115A and 115B. In this case, it would have been more beneficial to avoid handover 1a and stay in network node 115A (e.g., gNB1). Thus, in this example the granularity of the per-beam information used for the handover triggering is too high.

International patent application WO 2016/085266 describes a method for acquiring beam specific measurement information of a base station, by performing measurements on reference signals transmitted in each beam.

Further submission R1-1610437 from ZTE to the 3GPP TSG RAN WG1 meeting #86bis describes different aspects of Beam management and specifically management of beam groups.

SUMMARY

The invention is defined in the independent claims. Embodiments of the invention are defined in the dependent claims.

The embodiments of the present disclosure may provide one or more technical advantages. For example, in certain embodiments the processing due to filtering subject to multiple beams may be reduced by considering a combined filter of a beam group, which may advantageously reduce the efforts of the wireless device. As another example, when the measurement report triggering is based on measurements of groups, or sets, of beams (e.g., represented by active mode MRSs), from the serving and neighboring network nodes (e.g., gNBs), the risk of problems caused by too high granularity (e.g., individual beam based events) may be advantageously reduced. As still another example, certain embodiments may advantageously enable flexibility, where different wireless devices or wireless devices in different regions may be configured differently. Other advantages may be readily apparent to one having skill in the art. Certain embodiments may have none, some, or all of the recited advantages.

BRIEF DESCRIPTION OF THE DRAWINGS

For a more complete understanding of the disclosed embodiments and their features and advantages, reference is now made to the following description, taken in conjunction with the accompanying drawings, in which:

FIGURE 1 illustrates an overview of the DL based AMM solution proposed for 3GPP 5G NR;
FIGURE 2 illustrates an example of handovers in active mode between different beams;
FIGURE 3 is a block diagram illustrating an embodiment of a wireless communications network, in accordance with certain embodiments;
FIGURE 4 illustrates an example of handovers in active mode where measurement report triggering events based on groups of beams are used, in accordance with certain embodiments;
FIGURE 5 illustrates an example handover border between two eNBs in LTE, in accordance with certain embodiments;
FIGURE 6 illustrates an example handover border between two gNBs in NR for the same region shown in the example of FIGURE 5, in accordance with certain embodiments;
FIGURE 7 is an example signaling flow diagram, in accordance with certain embodiments;
FIGURE 8 is a flow diagram of a method in a wireless device, in accordance with certain embodiments;
FIGURE 9 is a flow diagram of a method in a network node, in accordance with certain embodiments;
FIGURE 10 illustrates an example optional management architecture, in accordance with certain embodiments;
FIGURE 11 is a block schematic of an exemplary base station, in accordance with certain embodiments;
FIGURE 12 is a block schematic of an exemplary wireless device, in accordance with certain embodiments;
FIGURE 13 is a block schematic of an exemplary wireless device, in accordance with certain embodiments;
FIGURE 14 is a block schematic of an exemplary network node, in accordance with certain embodiments;

FIGURE 15 is a block schematic of an exemplary radio network controller or core network node, in accordance with certain embodiments;
FIGURE 16 is a block schematic of an exemplary wireless device, in accordance with certain embodiments; and
FIGURE 17 is a block schematic of an exemplary network node, in accordance with certain embodiments.

DETAILED DESCRIPTION

In a beam-based system, the processing at the wireless device side increases (especially when the number of beams per network node increases). It is also possible that the amount of signaling increases as well, since there can be multiple transitions from one home beam to a different beam that need to be reflected in the signaling. If per-beam measurements are unfiltered, then the number of reports is also high due to fluctuations of the signal strength. In some cases, this is handled by filtering to lessen the impact of these variations. Given the large number of possible beams, however, a per-beam filter will increase the processing at the wireless device significantly.

In NR, the possibility of using beam-formed active mode MRSs will bring advantages in terms of directing a wireless device to the correct beam upon handover. The possibility of using beam-formed active mode MRSs, however, also creates challenges with respect to wireless device measurement and reporting. One possible approach to these challenges is that the measurement report triggering events used in legacy networks (e.g., events A1-A6 and/or C1-C2 events defined in E-UTRA) could be extended to use the beam-formed active mode MRSs, and handover decisions could be taken based on individual beams.

As described above, however, there can be situations where performing handover based on measurements of individual active mode MRSs may not be the most beneficial choice. One situation when handover based on individual active mode MRS measurements can be problematic is when the handover decisions causes ping-pong between different network nodes, such as in the scenario described above in relation to FIGURE 2. In such a case, unnecessary handovers can result between network nodes due to the use of per-beam information that has too high a granularity.

The present disclosure contemplates various embodiments that may address these and other deficiencies associated with existing approaches. In certain embodiments, to enable beam group based report triggering, a wireless device is configured to trigger reports by beam groups. The wireless device may be configured with report triggering for groups of beams enabling the wireless device to combine measurements of several beams into one triggering condition and thereby reducing the processing and signaling required in comparison to per beam report triggering, and allowing group-based evaluations and measurement report triggering.

According to one example embodiment, a method in a wireless device (e.g., a UE) is disclosed. The wireless device obtains a measurement configuration, the measurement configuration defining one or more beam groups and a report triggering configuration. A beam group may be defined as, for example, one of: a set of reference signals independent of transmission resources; a set of transmission resources independent of reference signals; a combined set of reference signals and transmission resources; a group of beams sharing the same transmitted cell identifier; a group of beams sharing multiple cell identifiers; a group of beams sharing the same node identifier; and a group of beams sharing the same transmission/reception point (TRP). Each of the one or more beam groups includes one or more beams, and each beam has an associated reference signal. In certain embodiments, the one or more beams in each beam group may comprise one or more of: less than all beams in a cell; and beams from more than one cell. The report triggering configuration defines one or more conditions that trigger a measurement report by the wireless device.

The wireless device may obtain the measurement configuration in any suitable manner. For example, in certain embodiments the wireless device may receive, from a network node, a measurement configuration message that includes the measurement configuration and information about the one or more beam groups and the report triggering configuration. As another example, the wireless device may be preconfigured with the measurement configuration (including the information about the one or more beam groups and the report triggering configuration).

The wireless device performs one or more measurements on the associated reference signal of each beam of the one or more beams included in each of the one or more beam groups. The wireless device filters the performed one or more measurements to obtain a filtered measurement value for each of the one or more beam groups, and determines, based on at least one filtered measurement value, whether at least one of the one or more conditions that trigger a measurement report by the wireless device are satisfied. In certain embodiments, upon determining that at least one of the one or more conditions that trigger a measurement report by the wireless device are satisfied, the wireless device sends a measurement report to a network node. In certain embodiments, the measurement report may include one or more of: one or more cell identifiers associated to a beam group; an identifier of a beam group that has triggered the measurement report by the wireless device; a measurement per beam for each beam in the beam group that has triggered the measurement report by the wireless device; and an aggregated value for the beam group that has triggered the measurement report by the wireless device. In certain embodiments, upon determining that at least one of the one or more conditions that trigger a measurement report by the wireless device are not satisfied, the wireless device refrains from sending a measurement report to the network node.

According to another example embodiment, a method in a network node (e.g., a gNB) is disclosed. The network node determines a measurement configuration for configuring a wireless device to perform measurement reporting based on beam-group filtering. The network node provides the measurement configuration to the wireless device. The measurement configuration defines one or more beam groups and a report triggering configuration. Each of the one or more beam groups includes one or more beams, and each beam has an associated reference signal. In certain embodiments, the one or more beams in each beam group may comprise one or more of: less than all beams in a cell; and beams from more than one cell. The report triggering configuration defines one or more conditions that trigger a measurement report by the wireless device.

In certain embodiments, the network node receives a measurement report from the wireless device if one or more conditions that trigger a measurement report by the wireless device are satisfied. The measurement report may include one or more of: one or more cell identifiers associated to a beam group; an identifier of a beam group that has triggered the measurement report by the wireless device; a measurement per beam for each beam in the beam group that has triggered the measurement report by the wireless device; and an aggregated value for the beam group that has triggered the measurement report by the wireless device. In some cases, the network node may make handover decisions for the wireless device based on the received measurement report.

In certain embodiments, the network node may send a request for capability information to the wireless device. The capability information may be related to beam group-based measurement report triggering. In such a scenario, the network node may receive the requested capability information from the wireless device.

Certain embodiments of the present disclosure may provide one or more technical advantages. For example, in certain embodiments the processing due to filtering subject to multiple beams may be reduced by considering a combined filter of a beam group, which may advantageously reduce the efforts of the wireless device. As another example, when the measurement report triggering is based on measurements of groups, or sets, of beams (which may be represented by active mode MRSs), from the serving and neighboring network nodes (e.g., gNBs), the risk of problems caused by too high granularity (individual beam based events) may be advantageously reduced. As still another example, certain embodiments may advantageously enable flexibility, where different wireless devices or wireless devices in different regions may be configured differently. Other advantages may be readily apparent to one having skill in the art. Certain embodiments may have none, some, or all of the recited advantages.

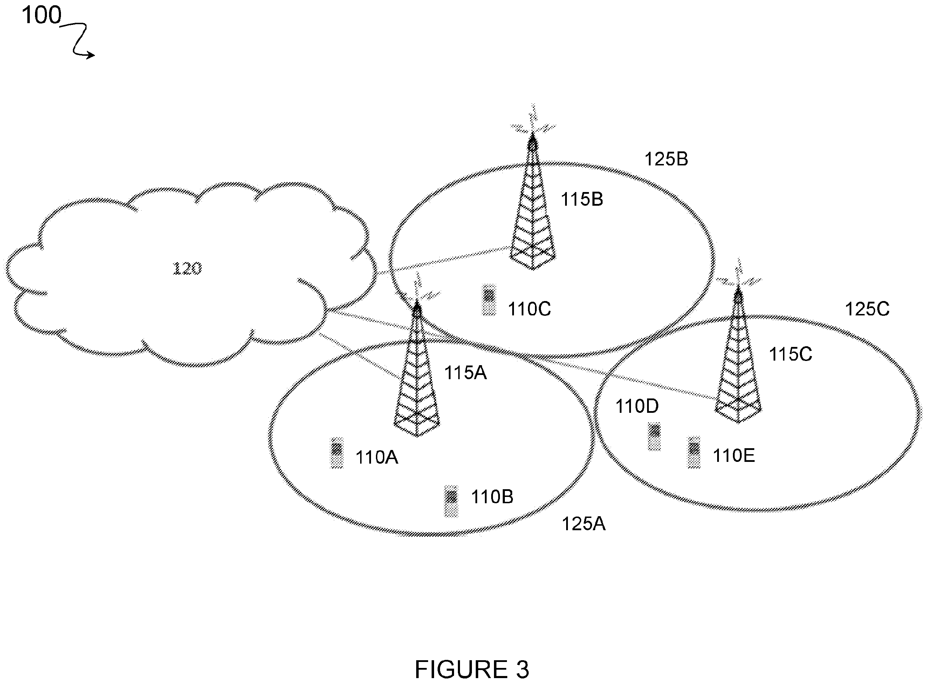

FIGURE 3 is a block diagram illustrating an embodiment of a network 100, in accordance with certain embodiments. Network 100 includes a plurality wireless devices 110 (e.g., wireless device 110A-E in the example of FIGURE 3) and one or more network node(s) 115 (e.g., network nodes 115A-C in the example of FIGURE 3). Wireless devices 110 may communicate with network nodes 115 over a wireless interface. For example, a wireless device 110 may transmit wireless signals to one or more of network nodes 115, and/or receive wireless signals from one or more of network nodes 115. The wireless signals may contain voice traffic, data traffic, control signals, and/or any other suitable information. In some embodiments, an area of wireless signal coverage associated with a network node 115 may be referred to as a cell 125. For example, in FIGURE 3 the area of wireless signal coverage associated with network node 115A is cell 125A, the area of wireless signal coverage associated with network node 115B is cell 125B, and the area of wireless signal coverage associated with network node 115C is cell 125C. In some embodiments, wireless devices 110 may have device-to-device (D2D) capability. Thus, wireless devices 110 may be able to receive signals from and/or transmit signals directly to another wireless device. In certain embodiments, network nodes 115 may transmit one or more beams, and one or more wireless devices 110 may be configured to monitor the beams from one or more of network nodes 115.

In certain embodiments, network nodes 115 may interface with a radio network controller. The radio network controller may control network nodes 115 and may provide certain radio resource management functions, mobility management functions, and/or other suitable functions. In certain embodiments, the functions of the radio network controller may be included in network node 115. The radio network controller may interface with a core network node. In certain embodiments, the radio network controller may interface with the core network node via an interconnecting network 120. Interconnecting network 120 may refer to any interconnecting system capable of transmitting audio, video, signals, data, messages, or any combination of the preceding. Interconnecting network 120 may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the core network node may manage the establishment of communication sessions and various other functionalities for wireless devices 110. Wireless devices 110 may exchange certain signals with the core network node using the non-access stratum layer. In non-access stratum signaling, signals between wireless devices 110 and the core network node may be transparently passed through the radio access network. In certain embodiments, network nodes 115 may interface with one or more network nodes over an internode interface, such as, for example, X2 and S1 interfaces.

As described above, example embodiments of network 100 may include one or more wireless devices 110, and one or more different types of network nodes capable of communicating (directly or indirectly) with wireless devices 110.

In some embodiments, the non-limiting term wireless device is used. Wireless devices 110 described herein can be any type of wireless device capable, configured, arranged and/or operable to communicate wirelessly with network nodes 115 and/or another wireless device. Communicating wirelessly may involve transmitting and/or receiving wireless signals using electromagnetic signals, radio waves, infrared signals, and/or other types of signals suitable for conveying information through air. In particular embodiments, wireless devices 110 may be configured to transmit and/or receive information without direct human interaction. For instance, a wireless device 110 may be designed to transmit information to a network on a predetermined schedule, when triggered by an internal or external event, or in response to requests from the network. Generally, a wireless device 110 may represent any device capable of, configured for, arranged for, and/or operable for wireless communication, for example radio communication devices. Examples of wireless devices 110 include, but are not limited to, UEs such as smart phones. Further examples include wireless cameras, wireless-enabled tablet computers, mobile terminals, laptop-embedded equipment (LEE), laptop-mounted equipment (LME), USB dongles, and/or wireless customer-premises equipment (CPE). Wireless device 110 may also be a radio communication device, target device, D2D UE, machine-type-communication (MTC) UE or UE capable of machine-to-machine (M2M) communication, low-cost and/or low-complexity UE, a sensor equipped with UE, or any other suitable devices. Wireless devices 110 may operate under either normal coverage or enhanced coverage with respect to its serving cell. The enhanced coverage may be interchangeably referred to as extended coverage. Wireless devices 110 may also operate in a plurality of coverage levels (e.g., normal coverage, enhanced coverage level 1, enhanced coverage level 2, enhanced coverage level 3 and so on). In some cases, wireless devices 110 may also operate in out-of-coverage scenarios.

As one specific example, wireless device 110 may represent a UE configured for communication in accordance with one or more communication standards promulgated by 3GPP, such as 3GPP's GSM, UMTS, LTE, and/or 5G standards. As used herein, a "UE" may not necessarily have a "user" in the sense of a human user who owns and/or operates the relevant device. Instead, a UE may represent a device that is intended for sale to, or operation by, a human user but that may not initially be associated with a specific human user.

Wireless devices 110 may support D2D communication, for example by implementing a 3GPP standard for sidelink communication, and may in this case be referred to as a D2D communication device.

As yet another specific example, in an Internet of Things (IOT) scenario, a wireless device 110 may represent a machine or other device that performs monitoring and/or measurements, and transmits the results of such monitoring and/or measurements to another wireless device and/or a network node. Wireless device 110 may in this case be a M2M device, which may in a 3GPP context be referred to as a MTC device. As one particular example, a wireless device 110 may be a UE implementing the 3GPP narrow band internet of things (NB-IoT) standard. Particular examples of such machines or devices are sensors, metering devices such as power meters, industrial machinery, or home or personal appliances (e.g., refrigerators, televisions, personal wearables such as watches, etc.). In other scenarios, a wireless device 110 may represent a vehicle or other equipment that is capable of monitoring and/or reporting on its operational status or other functions associated with its operation.

Wireless device 110 as described above may represent the endpoint of a wireless connection, in which case the device may be referred to as a wireless terminal. Furthermore, a wireless device 110 as described above may be mobile, in which case it may also be referred to as a mobile device or a mobile terminal.

Also, in some embodiments generic terminology, "network node" is used. As used herein, "network node" refers to equipment capable, configured, arranged and/or operable to communicate directly or indirectly with a wireless device and/or with other equipment in the wireless communication network that enable and/or provide wireless access to the wireless device. Examples of network nodes include, but are not limited to, access points (APs), in particular radio APs. A network node may represent base stations (BSs), such as radio base stations. Particular examples of radio base stations include Node Bs, evolved Node Bs (eNBs), and gNBs. Base stations may be categorized based on the amount of coverage they provide (or, stated differently, their transmit power level) and may then also be referred to as femto base stations, pico base stations, micro base stations, or macro base stations. "Network node" also includes one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base stations may also be referred to as nodes in a distributed antenna system (DAS).

As a particular non-limiting example, a base station may be a relay node or a relay donor node controlling a relay.

Yet further examples of network nodes include multi-standard radio (MSR) radio equipment such as MSR BSs, network controllers such as radio network controllers (RNCs) or base station controllers (BSCs), base transceiver stations (BTSs), transmission points, transmission nodes, Multi-cell/multicast Coordination Entities (MCEs), core network nodes (e.g., Mobile Switching Centers (MSCs), Mobility Management Entities (MMEs), etc.), Operation and Maintenance (O&M) nodes, Operations Support System (OSS) nodes, Self-Organizing Network (SON) nodes, positioning nodes (e.g., Evolved Serving Mobile Location Center (E-SMLCs)), minimization of drive tests (MDTs), or any other suitable network node. More generally, however, network nodes may represent any suitable device (or group of devices) capable, configured, arranged, and/or operable to enable and/or provide a wireless device access to the wireless communication network or to provide some service to a wireless device that has accessed the wireless communication network.

The terminology such as network node and wireless device should be considered non-limiting and does in particular not imply a certain hierarchical relation between the two; in general "network node" could be considered as device 1 and "wireless device" device 2, and these two devices communicate with each other, for example over some radio channel.

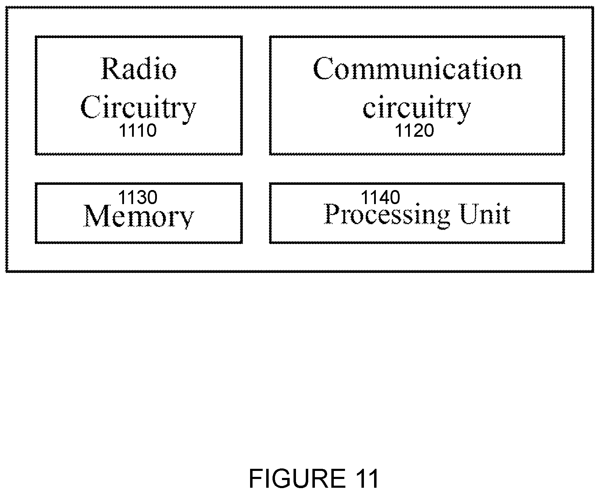

Example embodiments of wireless device 110, network nodes 115, and other network nodes (such as radio network controller or core network node) are described in more detail below with respect to FIGURES 11-17.

Although FIGURE 3 illustrates a particular arrangement of network 100, the present disclosure contemplates that the various embodiments described herein may be applied to a variety of networks having any suitable configuration. For example, network 100 may include any suitable number of wireless devices 110 and network nodes 115, as well as any additional elements suitable to support communication between wireless devices or between a wireless device and another communication device (such as a landline telephone). Furthermore, although certain embodiments may be described as implemented in an NR network, the embodiments may be implemented in any appropriate type of telecommunication system supporting any suitable communication standards (including 5G standards) and using any suitable components, and are applicable to any radio access technology (RAT) or multi-RAT systems in which a wireless device receives and/or transmits signals (e.g., data). For example, the various embodiments described herein may be applicable to LTE, LTE-Advanced, LTE in Unlicensed Spectrum (LTE-U), MulteFire, NR, 5G, IoT, NB-IoT, UMTS, HSPA, GSM, cdma2000, WCDMA, WiMax, UMB, WiFi, another suitable radio access technology, or any suitable combination of one or more radio access technologies. Although the design of measurement triggering for groups of reference signals may be described herein using DL as examples, the present disclosure is not limited to these examples. Rather, the present disclosure contemplates that the various embodiments described herein may be applied to other systems as well as UL or sidelinks.

As described above, in NR, the possibility of using beam-formed active mode MRSs will bring advantages in terms of directing wireless devices 110 to the correct beam upon handover. The possibility of using beam-formed active mode MRSs, however, also creates challenges with respect measurement and reporting by wireless devices 110. Although the measurement report triggering events used in legacy networks could be extended to use the beam-formed active mode MRSs, and handover decisions could be taken based on individual beams, there can be situations where performing handover based on measurements of individual active mode MRSs may not be the most beneficial choice. One situation when handover based on individual active mode MRS measurements can be problematic is when the handover decision causes ping-pong between different network nodes 115. Unnecessary handovers can result between network nodes 115 due to the use of per-beam information that has too high a granularity. The present disclosure contemplates various embodiments that may address these and other deficiencies associated with existing approaches.

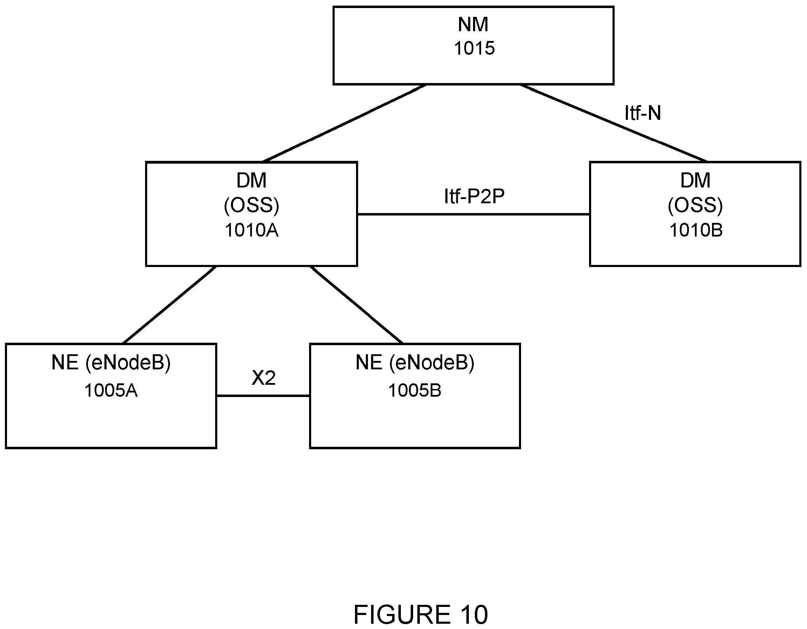

In certain embodiments, for example, a wireless device 110 (e.g., wireless device 110A) obtains a measurement configuration. Wireless device 110A may obtain the measurement configuration in any suitable manner. As one example, in certain embodiments wireless device 110A may be preconfigured with the measurement configuration. As another example, in certain embodiments wireless device 110A may receive the measurement configuration from a network node 115 (e.g., network node 115A). In such a scenario, network node 115A may determine a measurement configuration for configuring wireless device 110A to perform measurement reporting based on beam-group filtering. Network node 115A may provide the measurement configuration to wireless device 110A (e.g., via a measurement configuration message as described below in relation to FIGURE 10).

In some cases, network node 115A may send a request for capability information to wireless device 110A. The capability information may be related to beam group-based measurement report triggering. For example, the capability information may relate to one or more of: the ability of wireless device 110A to support beam group based report triggering; the ability of wireless device 110A to operate in an NR network; the ability of wireless device 110A to handle NR measurements on different frequency bands; and the ability of wireless device 110A to handle different numbers of beams. In certain embodiments, the capability information may include one or more of: NR release information (which may determine which reference signals wireless device 110A can measure on); a category of wireless device 110A; one or more frequency bands supported by wireless device 110A; a bandwidth capability of wireless device 110A; a processing capability of wireless device 110A; a sub-set of NR features supported by wireless device 110A; and any other suitable information. Wireless device 110A receives the request from network node 115A for capability information related to beam group-based measurement report triggering, and sends the requested capability information related to beam group-based measurement report triggering to network node 115A. Network node 115A receives the requested capability information from wireless device 110A.

The measurement configuration defines one or more beam groups and a report triggering configuration. Each of the one or more beam groups includes one or more beams, and each beam has an associated reference signal. The associated reference signal may be any suitable type of reference signal. For example, each beam may have an associated MRS. Examples of MRSs include, for example, Synchronization Signal (SS) / Physical Broadcast Channel (PBCH) blocks and CSI-RS. In some cases, one or more SS/PBCH blocks may be used as sparse periodic MRSs, such as the sparse periodic MRS described above in relation to FIGURE 1. In some cases, one or more CSI-RS can be used as dynamically configured MRS, such as the dynamically configured home MRS and/or dynamically configured away MRS described above in relation to FIGURE 1.

A beam group may be defined in any suitable manner. As one example, a beam group may be defined as a set of reference signals independent of transmission resources. As another example, a beam group may be defined as a set of transmission resources independent of reference signals. As still another example, a beam group may be defined as a combined set of reference signals and transmission resources. As yet another example, a beam group may be defined as a group of beams that share the same transmitted cell identifier. As another example, a beam group may be defined as a group of beams sharing multiple cell identifiers (e.g., a beam group may include sub-groups of beams where each sub-group shares the same cell identifier). As another example, a beam group may be defined as a group of beams that share the same node identifier. As another example, a beam group may be defined as a group of beams sharing the same TRP. In some cases, the one or more beams in a beam group may include less than all beams in a cell (e.g., less than all beams in cell 125A). In some cases, the one or more beams in a beam group may include beams from more than one cell (e.g., one or more beams from cell 125A and one or more beams from cell 125B). In certain embodiments, the configuration of the one or more beam groups may be provided in a measurement object (measObject). In other words, the measObject may contain one or more of these beam groups. In certain embodiments, the configuration of the one or more beam groups may be provided in the measObject for SS/PBCH Blocks (SSB) groups, CSI-RS groups, or both.

In certain embodiments, the one or more beam groups may be defined by a network node, such as network node 115A. In such a scenario, network node 115A may define the one or more beam groups as part of determining the measurement configuration for configuring wireless device 110A. In certain embodiments, the one or more beam groups may be predefined. In such a scenario, the predefined beam groups may be included in a measurement configuration that is preconfigured at wireless device 110A. As another example, the beam groups may be defined in another network node, such as an Operation and Maintenance (OAM) system node, and provided to network node 115A, as described in more detail below in relation to FIGURE 10. In certain embodiments, each beam group is associated to a beam group identifier.

Whether configured by the network (e.g., network node 115A) or preconfigured in wireless device 110A, the measurement configuration may configure wireless device 110A with any suitable beam groups. For example, in certain embodiments wireless device 110A may be configured with one or more beam groups with each group associated to a different cell 125. As another example, in certain embodiments wireless device 110A may be configured with one or more beam groups each of which are associated to the same cell 125. As another example, wireless device 110A may be configured with one or more beam groups that include beams from one or more different cells. As another example, in certain embodiments wireless device 110A may be configured with a single beam group that includes a plurality of sub-groups of beams. In certain embodiments, each of the sub-groups may be associated with a different cell. As another example, in certain embodiments wireless device 110A may be configured with one or more beam groups that include less than all of the beams in a cell. Other configurations of beam groups are possible. In certain embodiments, wireless device 110A may be configured with a plurality of beam groups made up of a combination of the various configurations of beam groups described herein.

The report triggering configuration defines one or more conditions that trigger a measurement report by wireless device 110A. A variety of conditions that trigger a measurement report by wireless device 110A may be used. For example, the one or more conditions that trigger a measurement report by wireless device 110A may be based on one or more of: a single filtered measurement value for a single beam group; a first filtered measurement value for a first beam group and a second filtered measurement value for a second beam group; and the first filtered measurement value for the first beam group and a first measurement value of a first beam. In certain embodiments, the report triggering configuration may be provided as part of a reportConfig information element (IE).

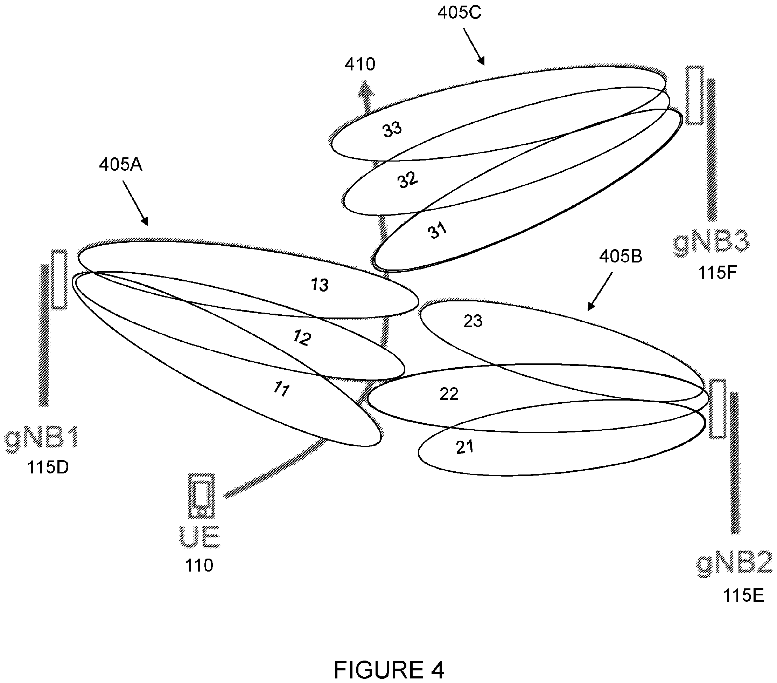

Wireless device 110A performs one or more measurements on the associated reference signal of each beam of the one or more beams included in each of the one or more beam groups. As described in more detail below in relation to FIGURE 4, wireless device 110A filters the performed one or more measurements to obtain a filtered measurement value for each of the one or more beam groups. In certain embodiments, the filtering may be performed at the physical layer. For example, a per-beam filter in the physical layer may determine a filtered value based on historical measurements as well as filtering parameters, as described in more detail below in relation to FIGURE 4. In certain embodiments, the filtering may be performed at layer 3. For example, layer 3 filtering may combine current and historical per group values into a filtered value, as described in more detail below in relation to FIGURE 4. In certain embodiments, the L3 filtering may be a weighted sum of a most recent measurement result and one or more historical filtered measurement results.

In some cases, the weight of the most recent measurement result and the one or more historical filtered measurement results may be given by a filter coefficient.

Wireless device 110A determines, based on at least one filtered measurement value, whether at least one of the one or more conditions that trigger a measurement report are satisfied. Wireless device 110A may determine whether at least one of the one or more conditions that trigger a measurement report are satisfied in any suitable manner. As one example, wireless device 110A may compare a first filtered measurement value for a first beam group and a second filtered measurement value for a second beam group, wherein the first beam group comprises a plurality of beams at a serving node (e.g., network node 115A), and the second beam group comprises a plurality of beams at a candidate node (e.g., network node 115B). As another example, wireless device 110A may compare the first beam group to a specific beam of the candidate node. As still another example, wireless device 110A may compare a specific beam of the serving node with the second beam group. As yet another example, wireless device 110A may compare a third beam group with a fourth beam group. In certain embodiments, the third beam group may comprise less than all beams in a cell associated with the third beam group. In certain embodiments, the third beam group may include a plurality of beams comprising beams from two or more cells (e.g., at least one beam from a first cell associated with the third beam group and at least one beam from a second cell associated with the third beam group). In certain embodiments, the fourth beam group may comprise all beams in a cell associated with the fourth beam group.

In certain embodiments, wireless device 110A may determine whether at least one of the one or more conditions that trigger a measurement report are satisfied based on one or both of: one or more of an offset and a time to trigger that are specific to a particular beam group of the one or more beam groups; and one or more of an offset and a time to trigger that are specific to a particular beam. In some cases, network node 115A may configure one or both of: one or more of the offset and the time to trigger that are specific to the particular beam group of the one or more beam groups; and one or more of the offset and the time to trigger that are specific to a particular beam.

Whether wireless device 110A sends a measurement report to network node 115A may depend on whether or not at least one of the one or more conditions that trigger a measurement report by wireless device 110A are satisfied. For example, upon determining that at least one of the one or more conditions that trigger a measurement report are satisfied, wireless device 110A may send a measurement report to network node 115A. The measurement report may include any suitable information. As one example, the measurement report may include an identifier of a beam group that has triggered the measurement report by wireless device 110A. The identifier may be any suitable identifier, such as a group ID. In some cases, the measurement configuration may include an association between reportConfig, measObject, measID as usual, in addition to the group ID. As another example, the measurement report may include one or more cell IDs associated to a beam group. As another example, the measurement report may include a measurement per beam for each beam in the beam group that has triggered the measurement report by wireless device 110A. The measurement per beam for each beam in the beam group that has triggered the measurement report by wireless device 110A may be L3 filtered and/or L1 filtered. As another example, the measurement report may include an aggregated value for the beam group that has triggered the measurement report by wireless device 110A. The aggregated value for the beam group may, for example, be an average of beam group quality (such as one or more of an average RSRP, an average RSRQ, and an average SINR). In some cases, the aggregated value for the beam group that has triggered the measurement report by wireless device 110A may be a linear average.

On the other hand, upon determining that at least one of the one or more conditions that trigger a measurement report are not satisfied, wireless device 110A may refrain from sending a measurement report to network node 115A. In cases where wireless device 110A sends a measurement report, network node 115A may receive the measurement report from wireless device 110A and perform one or more operations based on the received measurement report from wireless device 110A. As one example, network node 115A may make handover decisions for wireless device 110A based on the received measurement report. In certain embodiments, network node 115A may aggregate performance information associated with the one or more beam groups. For example, network node 115A may determine an average of beam group quality. The performance information may take a variety of forms. As one example, the performance information may be information about a number of successful handover attempts and a number of unsuccessful handover events.

FIGURE 4 illustrates an example of handovers in active mode where measurement report triggering events based on groups of beams are used, in accordance with certain embodiments. Similar to FIGURE 2 above, FIGURE 4 illustrates an example with three network nodes 115D (e.g., gNB1), 115E (e.g., gNB2), and 115F (e.g., gNB3). Each network node 115 transmits a plurality of beams. In the example of FIGURE 4, network node 115D transmits beams 11, 12, and 13, network node 115E transmits beams 21, 22, and 23, and network node 115F transmits beams 31, 32, 33. Although FIGURE 4 illustrates three beams transmitted by each of network nodes 115D, 115E and 115F, this is for purposes of example only. The present disclosure contemplates that network nodes 115 may transmit more or fewer beams than illustrated in the example of FIGURE 4.

In the example of FIGURE 4, beams 11, 12, and 13 transmitted by network node 115D (gNB1) are considered to be in a first group (Group 1 405A), beams 21, 22, and 23 transmitted by network node 115E (gNB2) are considered to be in a second group (Group 2 405B), and beams 31, 32, and 33 transmitted by network node 115F (gNB3) are considered to be in a third group (Group 3 405C).

Although FIGURE 4 illustrates particular configurations of beam Group 1 405A, beam Group 2 405B, and beam Group 3 405C, the beam group configurations illustrated in FIGURE 4 are for purposes of example only, and the present disclosure is not limited to such examples. Rather, the present disclosure contemplates that any suitable beam group configurations may be used, and the number of beams in each beam group may be different from that illustrated in the example of FIGURE 4. For example, network nodes 115D, 115E, and 115F may transmit one or more other beams in addition to those illustrated in the example of FIGURE 4. A beam group 405 may include all or less than all of the beams transmitted by a given network node 115. For example, in some cases a particular beam transmitted by a given network node 115 may not be included in a beam group because it may be the case that wireless devices do not often travel along a path that includes that particular beam. The likelihood of a wireless device to pass through a particular beam may be determined in any suitable manner (e.g., based on historical data for one or more wireless devices). Furthermore, in certain embodiments a beam group 405 may include beams from more than one network node (e.g., network nodes 115A and 115B).

In the example of FIGURE 4, wireless device 110 uses measurement report triggering based on groups of beams, where a plurality of beams transmitted from the same network node 115 (e.g., gNB) are considered to be in the same group. This may advantageously reduce the risk of problems associated with existing approaches, such as too high granularity that results when individual beam based events are used (as in the case of FIGURE 2 described above).

In the example of FIGURE 4, assume that wireless device 110 is moving along arrow 410 through an area in the vicinity of network nodes 115D, 115E, and 115F. A wireless device 110 (e.g., a UE) may be configured to monitor one or more of the beams from one or more of network nodes 115D, 115E, and 115F. Initially, in the example of FIGURE 4, wireless device 110 is served by network node 115D. Each beam $ij$ (node $i$, beam $j$ at node i) is associated with a reference signal (e.g., an MRS, $MRS_{ij}$) and a transmission resource $TR_{ij}^{(k)}$ for transmission $k$. The MRSs may be configured in any suitable manner. For example, the MRSs may be configured to be locally unique so that wireless device 110 only detects unique MRSs, or locally non-unique, but instead transmitted in disjunct transmission resources.

The transmission resources may be assigned in any suitable manner. For example, the transmission resources may be assigned on demand. As another example, the transmission resources may be assigned according to one or more patterns, for example a periodic pattern of transmission instants (e.g., if $TR_{ij}^{(k)}$ is transmitted at slot $t^{(k)}$, then $TR_{ij}^{(k+1)}$ is transmitted at slot $t^{(k+1)} = t^{(k)} + T$, where T denotes the periodicity).

The configuration scope described above means that the ambition is that the combination $(MRS_{ij}, TR_{ij}^{(k)})$ is locally unique.

In addition, each beam may also transmit a cell identifier or a node identifier that is possibly shared with other beams.

As described above, a group of beams may be defined in a variety of ways. The beams in a group can be served by the same network node 115 or different network nodes 115. In certain embodiments, the beams in a beam group may include less than all of the beams transmitted by a particular network node 115. Therefore, beams are discussed herein in terms of the tuple $(MRS_{ij}, TR_{ij}^{(k)})$. As one example, a beam group can be defined according to a set of MRSs, such as one or more of a specific list, a range, a periodic set, and independent of transmission resources. As another example, a beam group can be defined according to a set of transmission resources, such as one or more of: a specific list, a range, a periodic set, and independent of MRSs. As another example, a beam group can be defined according to a combined set of MRSs and transmission resources, such as one or more of a specific list of tuples $(MRS_{ij}, TR_{ij}^{(k)})$ and a range of either MRSs, transmission resources or both. As still another example, a beam group can be defined according to all tuples that share the same transmitted cell or node identifier. Note that, as described above, beam groups can be defined without an association to a transmitted cell ID.

In the description that follows, the beam group $n$ is denoted $G^n$, and primarily, the description that follows will focus on one group at the time, which will be denoted G without loss of generality.

As described above in relation to FIGURE 3, wireless device 110 obtains a measurement configuration. The measurement configuration may define one or more beam groups and a report triggering configuration. Wireless device 110 may obtain the measurement configuration in any suitable manner. For example, wireless device 110 may obtain the measurement configuration from a serving network node 115 (e.g., a serving base station). As another example, wireless device 110 may obtain the measurement configuration via broadcasted system information. As still another example, the measurement configuration may be preconfigured at wireless device 110.

Based on the obtained measurement configuration, wireless device 110 configures its physical layer for monitoring of beams. The physical layer can be configured to monitor listed transmission resources (e.g., measurement window chunks) and optionally also listed MRS (or alternatively MRSs can be detected blindly). Wireless device 110 performs one or more measurements on the associated reference signal of each beam of the one or more beams included in each of the one or more beam groups. Assuming that the combination $(MRS_{ij}, TR_{ij}^{(k)})$ is locally unique, the physical layer of wireless device 110 can determine a measurement $y_{ij}^{(k)}$ for each beam to be monitored.

Wireless device 110 filters the performed one or more measurements to obtain a filtered measurement value for each of the one or more beam groups. For example, in certain embodiments a per-beam filter in the physical layer determines a filtered value $m_{ij}^{(k)}$ at time k based on historical measurements $y_{ij}^{(k)}$, $y_{ij}^{(k-1)}$, ... as well as filtering parameters $\theta_1^1$, $\theta_2^1$, ... $\theta_M^1$ where superscript "1" indicates Layer 1 or physical layer filtering parameters. In case no physical layer filtering is considered, then $m_{ij}^{(k)} = y_{ij}^{(k)}$.

In order to reduce the transfer of measurements from the physical layer to layer 3, the measurements can be combined already in the physical layer. One example is to combine the measurements associated to all beams of a group into one value per time instant. The measurements associated to all beams of a group can be combined into one value per time instant in a variety of ways. For example, using the largest measurement among all measurements associated to beams of the group G at a time instant according to Equation (1) below:

$$M^{(k)} = \max_{ij \in G} m_{ij}^{(k)} \ . \hspace{4cm} (1)$$

Moreover, the combining can also note the beam corresponding to the maximum value. Alternatively, for example, the average over the measurements, the median over the measurements, etc. may be used. As another example, in certain embodiments the per beam values $y_{ij}^{(k)}$ could instead be combined into one value according to Equation 2 below:

$$Y^{(k)} = \max_{ij \in G} y_{ij}^{(k)}, \hspace{4cm} (2)$$

and then filtering in physical layer can be considered by combining $Y^{(k)}$, $Y^{(k-1)}$... to generate a filtered value $M^{(k)}$.

In case the combining of values from beams of the group are handled by the physical layer (which may, in some cases, be preferred), then layer 3 only receives one value per group and time instant. However, an alternative is that the grouping may be handled in layer 3, based on per beam measurements $M_{ij}^{(k)} = m_{ij}^{(k)}$. This means that the combining will correspond to combining the measurements associated to all beams of a group into one value per time instant, such as, for example, the largest measurement among all measurements associated to beams of the group G at a time instant according to Equation (1) reproduced below:

$$M^{(k)} = \max_{ij \in G} M_{ij}^{(k)} \ . \hspace{4cm} (1)$$

Moreover, the combining can also note the beam corresponding to the maximum value. Alternatively, for example, the average over the measurements, the median over the measurements, etc., may be used.

Once the per group measurement value $M^{(k)}$ is prepared, then layer 3 filtering is considered by combining current and historical per group values $M^{(k)}$ into a filtered value $F^{(k)}$. One example of the L3 filtering is the current L3 filter considered in LTE, in which the measurement result is filtered before being used for evaluation of reporting criteria or for measurement reporting. This can be accomplished using Equation 3 below:

$$F_n = (1 - a) \cdot F_{n-1} + a \cdot M_n \ , \hspace{3cm} (3)$$

where: $M_n$ is the latest received measurement result from the physical layer; $F_n$ is the updated filtered measurement result that is used for evaluation of reporting criteria or for measurement reporting; $F_{n-1}$ is the old filtered measurement result, where $F_0$ is set to $M_1$ when the first measurement result from the physical layer is received; and $a = 1/2^{(k/4)}$, where k is the *filterCoefficient* for the corresponding measurement quantity received by the *quantityConfig*. Note that k = 0 implies no filtering.

Wireless device 110 determines, based on at least one filtered measurement value, whether at least one of the one or more conditions that trigger a measurement report by wireless device 110 are satisfied. In certain embodiments, given a value for a beam group, the value can be used when evaluating triggering conditions. The conditions can be based on any suitable criteria. In certain embodiments, the conditions can be based on one or more of the following non-limiting examples: a value from one beam group only; two values from two beam groups, respectively; and one value from a beam group and one from a specific beam.

This enables triggering events that compare, for example, beams at a serving node grouped together compared to beams at a candidate node grouped together. In essence, this resembles the cell comparisons in other RATs such as LTE. As another example, triggering events that compare beams at a serving node grouped together compared to a specific beam at a candidate node may be used. As another example, triggering events that compare a specific beam at the serving node compared to beams at a candidate node grouped together may be used. As another example, triggering events that compare a third beam group with a fourth beam group. In certain embodiments, the third beam group may include less than all beams in a cell associated with the third beam group, and the fourth beam group may include all beams in a cell associated with the fourth beam group. In certain embodiments, the third beam group may include a plurality of beams comprising beams from two or more cells (e.g., at least one beam from a first cell associated with the third beam group and at least one beam from a second cell associated with the third beam group).

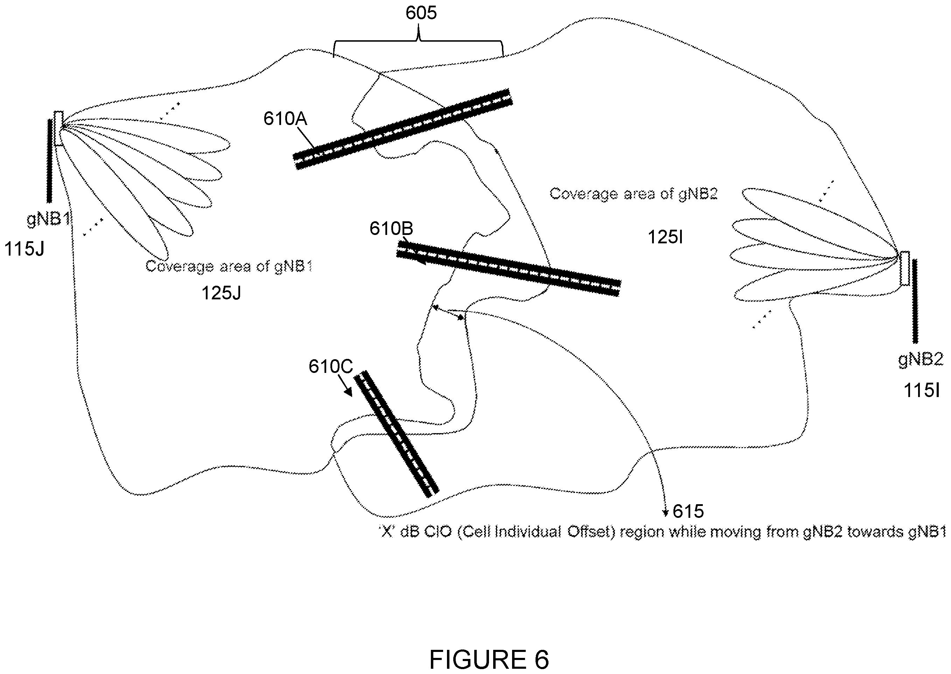

The comparisons made in the triggering events could further include, for example, an offset (e.g., signal strength and/or quality) and TTT that are specific for the considered group of cells or beams. This enables a handover configuration adjusted for specific handover regions, as described in more detail below in relation to FIGURE 6. Non-limiting examples of events from LTE are described in more detail below.

In the intra-RAT measurement report triggering events specified for LTE, measurements on serving cells (primary and secondary) and neighboring cells are considered (events A1-A5), as well as measurements on reference signals for channel state information, CSI-RS (Event C1-C2). The events focus on cells (or, in the CSI-RS case, the CSI-RS resource) becoming better/worse than one or more given threshold(s), or offset better than another cell (or CSI-RS resource). The slogans of the LTE events include: Event A1: Serving becomes better than threshold; Event A2: Serving becomes worse than threshold; Event A3: Neighbour becomes offset better than PCell/PSCell; Event A4: Neighbour becomes better than threshold; Event A5: PCell/PSCell becomes worse than threshold1 and neighbour becomes better than threshold2; Event A6: Neighbour becomes offset better than SCell; Event C1: CSI-RS resource becomes better than threshold; and Event C2: CSI-RS resource becomes offset better than reference CSI-RS resource.

By using the beam group-based measurement report triggering described above, the risk of problems associated with individual beam-based events (such as too high granularity) may advantageously be reduced. As described above in relation to FIGURE 2, using the existing individual beam-based approach in the scenario of FIGURE 4 would result in six handovers when wireless device 110 is moving along arrow 405 (described in Table 1 above). In the example of FIGURE 4, in contrast, the use of measurement report triggering event(s) based on groups of beams, where beams transmitted from the same network node 115 (e.g., gNB) (or different network nodes 115) are considered to be in the same group, reduces the number of handovers that result. For example, as wireless device 110 moves along arrow 410, the beam-group based reporting described above results in Group 2 405B (including beams 21, 22, and 23 transmitted by network node 115E (gNB 2)), and hence beam 22, will not be considered as an attractive handover candidate. Thus, wireless device 110 will instead stay in beam 12 transmitted by network node 115D (gNB 1) a bit longer, and then handover to beam 13 a bit earlier than in the example of FIGURE 2 described above (which uses individual beam-based triggering events). This way, no ping-pong between network node 115D (gNB 1) and network node 115E (gNB2) will take place. This is shown in Table 2 below:

Table 2: Example handover decisions based on groups of active mode MRS measurements.

| Handover | - | 1b | 2b | 3b | 4b | 5b |
|---|---|---|---|---|---|---|
| New Serving gNB | 115D | 115D | 115D | 115F | 115F | 115F |
| New Serving Beam | 11 | 12 | 13 | 31 | 32 | 33 |

Although the example described above uses a subset of beams transmitted by a single network node 115, other groupings of beams are possible. Indeed, other groupings of beams than per active mode cell or gNB described can be beneficial. In NR, an active mode cell will consist of several beams. Even in a beam-based scenario, the overall coverage area of the active mode cell in NR could look very similar to the LTE cells as shown in FIGURE 6 described below (independent of whether the overall coverage of the connected mode cell is calculated based on the best beam amongst all the beams or the average beam quality amongst all the beams from the connected mode cell is considered for comparing with similar measurement from the neighboring cell).

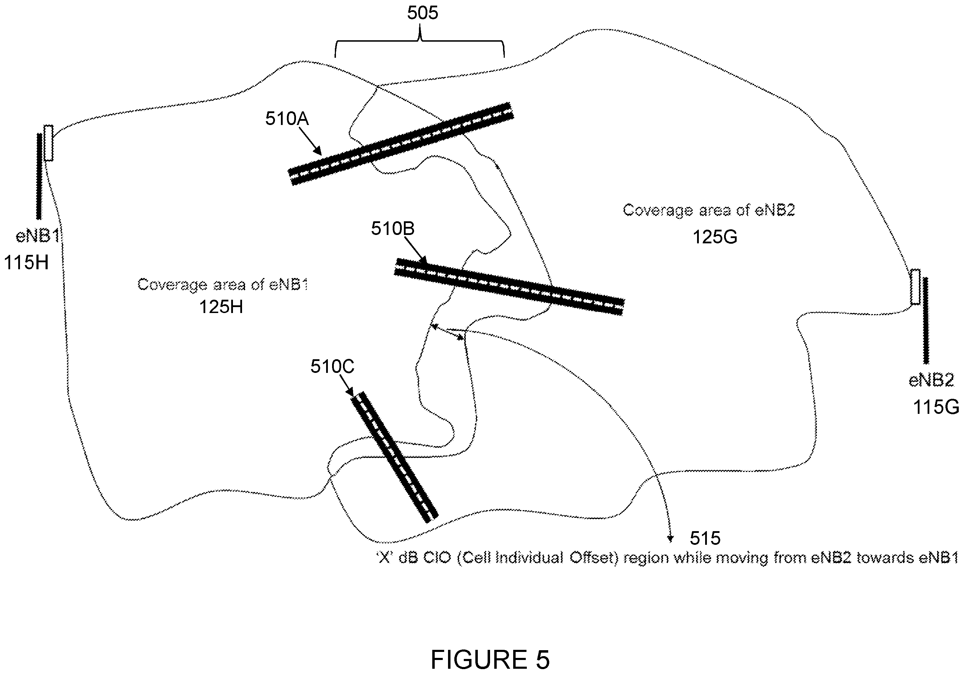

FIGURE 5 illustrates an example handover border 505 between two network nodes in LTE, in accordance with certain embodiments. More particularly, FIGURE 5 illustrates an example handover border between a serving network node 115G (e.g., eNB2) and a neighboring network node 115H (e.g., eNB1) in LTE. Each network node has a particular coverage area (or cell) 125. For example, network node 115G (eNB2) is associated with cell 125G, and network node 115H (eNB1) is associated with cell 125H. In the example of FIGURE 5, there are three motorways 510A, 510B, and 510C (e.g., roads on which one or more vehicles drive). Each motorway 510A-C is located along the handover border 505 and the region 515 of "X" dB offset between the two cells varies greatly depending on which motorway is being used by a wireless device. As described above, in existing LTE approaches, where no beam information is available, there are situations where the information used for the handover triggering has a too high granularity. In the example case of FIGURE 5, the CIO along with a time to trigger (TTT) are used to ensure that the number of ping-pong handovers and the number of handover failures are kept to a minimum in the network. Due to the difference in the propagation properties in different border areas of two cells, however, the same triggering condition may not be suitable over the whole cell border. Such a scenario is illustrating in FIGURE 5.

In the example of FIGURE 5, the region where the RSRP difference between the serving cell 125G (network node 115G (eNB2)) and the neighboring cell 125H (network node 115H (eNB1)) is "-X" dB is in region 515. Due to the difference in the propagation properties in different areas (in some regions of the border 505 only network node 115H (eNB1) might have a line of sight (LOS) whereas in some other parts only network node 115G (eNB2) can have LOS and some other parts there can be no LOS from either of network nodes 115G and 115H) of the handover border 505 between the two cells, the same CIO would act inefficiently for wireless devices in different part of the handover border 505.

If one would use the same approach in NR as described above (that is, using active mode cell specific mobility events based on an active mode cell or gNB specific reference signal), the advantage of having different handover configurations (e.g., individual offsets) in different directions offered by considering separate beams is lost.

FIGURE 6 illustrates an example handover border 605 between two gNBs in NR for the same region shown in the example of FIGURE 5, in accordance with certain embodiments. More particularly, FIGURE 6 illustrates an example handover border 605 between a serving network node 115I (e.g., gNB2) and a neighboring network node 115J (e.g., gNB1) in NR. Each network node 115 has a particular coverage area (or cell) 125. For example, network node 115I (gNB2) is associated with cell 125I, and network node 115J is associated with cell 125J. In the example of FIGURE 6, there are three motorways 610A, 610B, and 610C. Each motorway 610A-C is located along the handover border 605 and the region 615 of "X" dB offset between the two cells varies greatly depending on which motorway is being used by a wireless device. Unlike the example of FIGURE 5 described above, in the example of FIGURE 6 multiple beams are used at the transmitter side of the gNB compared to sector beams of eNBs of LTE in the previous example of FIGURE 5.

In the example of FIGURE 6, because different regions of handover border 605 between network nodes 115I (gNB2) and 115J (gNB1) are covered by different beams of the two network nodes 115I and 115J, there is an advantage of grouping the beams from the neighboring network node 115J (gNB1) and assigning group specific configurations for measurement report triggering to optimize mobility between the network node 115I (gNB2) and network node 115J (gNB1). As an example, serving network node 115I (gNB2) could configure a wireless device with two different groups (as described above in relation to FIGURE 4) in relation to the beams of neighboring network node 115J (gNB1). Each group may be associated with one or more of an offset and a TTT. In certain embodiments, the offset and/or TTT associated with each group may be different.

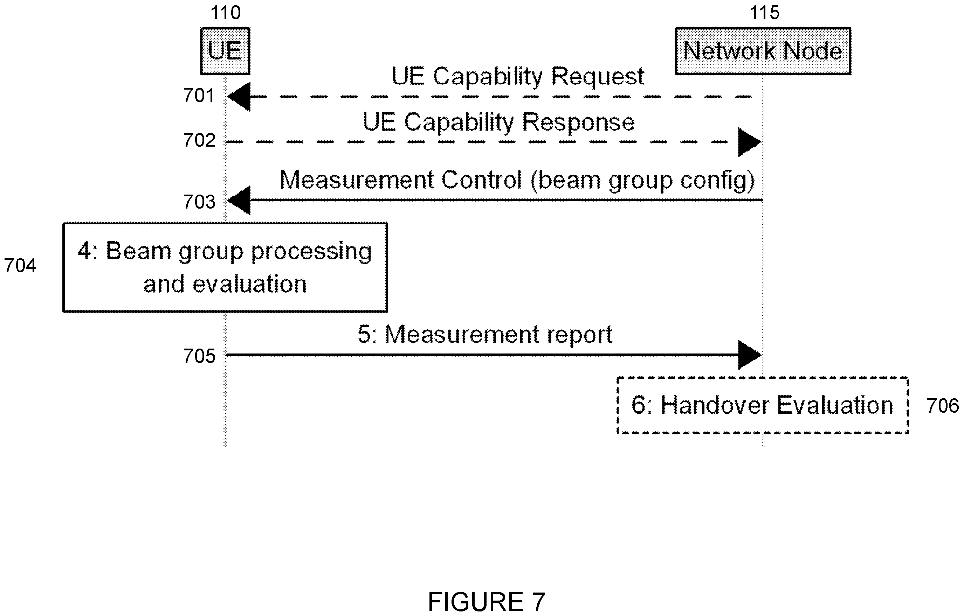

FIGURE 7 is an example signaling flow diagram, in accordance with certain embodiments. More particularly, FIGURE 7 illustrates an example signaling flow between a wireless device 110 (e.g., a UE in the example of FIGURE 7) and a network node 115 (e.g., a gNB). Optionally, at step 701, network node 115 (e.g., a serving base station, such as a gNB) requests capability information from wireless device 110. The capability information may be related to beam group-based measurement report triggering, and in particular wireless devices 110's capabilities associated with beam group report triggering. Optionally, at step 702, wireless device 110 responds to the request for capability information. The capability response may include, for example, capability information related to the ability of wireless device 110 to perform beam group-based measurement report triggering.

At step 703, if wireless device 110 is capable of beam group-based measurement report triggering (for example as indicated by the capability information received at step 702), network node 115 sends a measurement control message to wireless device 110. The measurement control message may provide a measurement configuration to wireless device 110. As described above, the provided measurement configuration may define one or more beam groups and a report triggering configuration for wireless device 110. In certain embodiments, each beam group may be associated to a beam group identifier. In certain embodiments, in addition to the beam group report triggering configuration, the measurement configuration may include one or more of a beam group individual offset and a beam group individual TTT.

At step 704, wireless device 110 processes per beam measurements based on the one or more beam groups defined in the measurement configuration and evaluates the processed per beam measurements according to the report triggering configuration defined in the measurement configuration. In certain embodiments, the processing performed at step 704 may include performing one or more measurements on the associated reference signal of each beam of the one or more beams included in each of the one or more beam groups, and filtering the performed one or more measurements to obtain a filtered measurement value for each of the one or more beam groups. In certain embodiments, the evaluation performed at step 704 may include determining, based on at least one filtered measurement value, whether at least one of the one or more conditions that trigger a measurement report by the wireless device are satisfied. In determining whether at least one of the one or more conditions that trigger a measurement report have been satisfied, wireless device 110 may perform one or more of the comparisons described above. When a report triggering condition is met, at step 705 wireless device 110 sends a measurement report to network node 115.

The measurement report may include any suitable information. As one example, the measurement report may include an identifier of a beam group that has triggered the measurement report by wireless device 110. The identifier may be any suitable identifier, such as a group ID. In some cases, the measurement configuration may include an association between reportConfig, measObject, measID as usual, in addition to the group ID. As another example, the measurement report may include one or more cell IDs associated to a beam group. As another example, the measurement report may include a measurement per beam for each beam in the beam group that has triggered the measurement report by wireless device 110. The measurement per beam for each beam in the beam group that has triggered the measurement report by wireless device 110 may be L3 filtered and/or L1 filtered. As another example, the measurement report may include an aggregated value for the beam group that has triggered the measurement report by wireless device 110. The aggregated value for the beam group may, for example, be an average of beam group quality (such as one or more of an average RSRP, an average RSRQ, and an average SINR). In some cases, the aggregated value for the beam group that has triggered the measurement report by wireless device 110A may be a linear average.

In certain embodiments, optionally at step 706 network node 115 may evaluate handover decisions based on the received measurement report(s). In certain embodiments, network node 115 may aggregate performance information associated with the one or more beam groups. For example, network node 115A may determine an average of beam group quality. The performance information may comprise information about a number of successful handover attempts and a number of unsuccessful handover events.

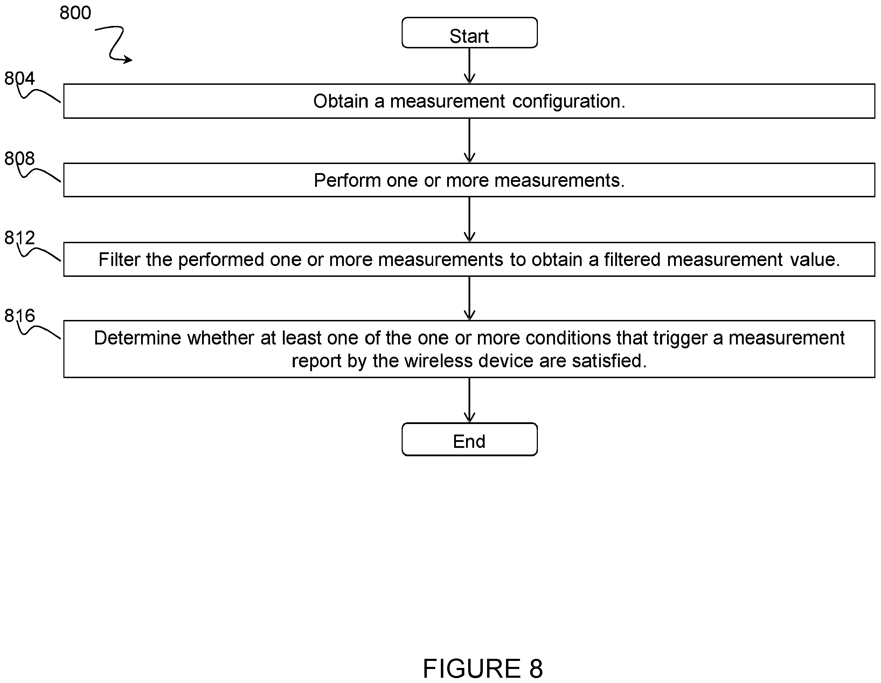

FIGURE 8 is a flow diagram of a method 800 in a wireless device, in accordance with certain embodiments. Method 800 begins at step 804, where the wireless device obtains a measurement configuration. The measurement configuration defines one or more beam groups and a report triggering configuration. Each of the one or more beam groups comprises one or more beams, and each beam has an associated reference signal. In certain embodiments, the one or more beams in each beam group may comprise one or more of: less than all beams in a cell; and beams from more than one cell. In certain embodiments, each beam group may have an associated beam group identifier. In certain embodiments, a beam group may be defined as one of: a set of reference signals independent of transmission resources; a set of transmission resources independent of reference signals; a combined set of reference signals and transmission resources; a group of beams sharing the same transmitted cell identifier; a group of beams sharing the same node identifier; and a group of beams sharing the same TRP.

The report triggering configuration defines one or more conditions that trigger a measurement report by the wireless device. In certain embodiments, the one or more conditions that trigger a measurement report by the wireless device may be based on one or more of: a single filtered measurement value for a single beam group; a first filtered measurement value for a first beam group and a second filtered measurement value for a second beam group; and the first filtered measurement value for the first beam group and a first measurement value of a first beam.

In certain embodiments, the method may comprise receiving a request from a network node for capability information related to beam group-based measurement report triggering. The method may comprise sending the requested capability information related to beam group-based measurement report triggering to the network node.

At step 808, the wireless device performs one or more measurements on the associated reference signal of each beam of the one or more beams included in each of the one or more beam groups. The measurements may be any suitable measurements. For example, the one or more measurements may be one or more of a RSRP measurement and a RSRQ measurement.

At step 812, the wireless device filters the performed one or more measurements to obtain a filtered measurement value for each of the one or more beam groups. In certain embodiments, the filtering may be performed at the physical layer. In certain embodiments, the filtering may be performed at layer 3.

At step 816, the wireless device determines, based on at least one filtered measurement value, whether at least one of the one or more conditions that trigger a measurement report by the wireless device are satisfied. In certain embodiments, determining, based on at least one filtered measurement value, whether at least one of the one or more conditions that trigger a measurement report by the wireless device are satisfied may comprise one or more of: comparing a first filtered measurement value for a first beam group and a second filtered measurement value for a second beam group, wherein the first beam group comprises a plurality of beams at a serving node, and the second beam group comprises a plurality of beams at a candidate node; comparing the first beam group to a specific beam of the candidate node; comparing a specific beam of the serving node with the second beam group; and comparing a third beam group with a fourth beam group, wherein: the third beam group comprises one or more of: less than all beams in a first cell associated with the third beam group; and at least one beam from the first cell associated with the third beam group and at least one beam from a second cell associated with the third beam group; and the fourth beam group comprises all beams in a cell associated with the fourth beam group. In certain embodiments, the first beam group may include beams from more than one node. In certain embodiments, the second beam group may include beams from more than one node. In certain embodiments, determining whether at least one of the one or more conditions that trigger a measurement report by the wireless device are satisfied may be further based on one or both of: one or more of an offset and a time to trigger that are specific to a particular beam group of the one or more beam groups; and one or more of an offset and a time to trigger that are specific to a particular beam.

In certain embodiments, the method may comprise upon determining that at least one of the one or more conditions that trigger a measurement report by the wireless device are satisfied, sending a measurement report to a network node. The measurement report may include any suitable information. As one example, the measurement report may include an identifier of a beam group that has triggered the measurement report by the wireless device. As another example, the measurement report may include one or more cell IDs associated to a beam group. As another example, the measurement report may include a measurement per beam for each beam in the beam group that has triggered the measurement report by the wireless device. The measurement per beam for each beam in the beam group that has triggered the measurement report by the wireless device may be L3 filtered and/or L1 filtered. As another example, the measurement report may include an aggregated value for the beam group that has triggered the measurement report by the wireless device. The aggregated value for the beam group may, for example, be an average of beam group quality (such as one or more of an average RSRP, an average RSRQ, and an average SINR). In some cases, the aggregated value for the beam group that has triggered the measurement report by wireless device 110A may be a linear average.

In certain embodiments, the method may comprise upon determining that at least one of the one or more conditions that trigger a measurement report by the wireless device are not satisfied, refraining from sending a measurement report to a network node.

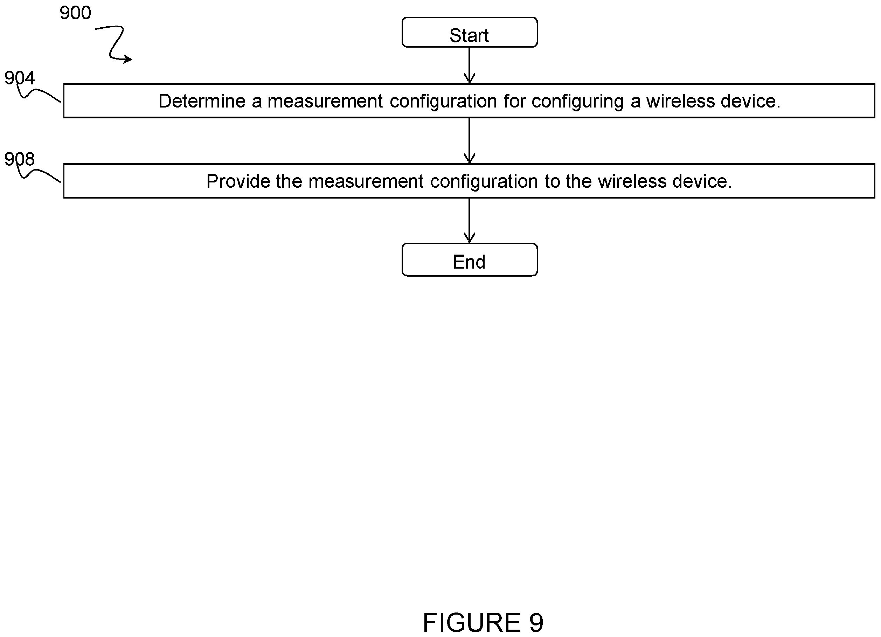

FIGURE 9 is a flow diagram of a method 900 in a network node, in accordance with certain embodiments. Method 900 begins at step 904, where the network node determines a measurement configuration for configuring a wireless device to perform measurement reporting based on beam-group filtering. The measurement configuration defines one or more beam groups and a report triggering configuration. Each of the one or more beam groups comprises one or more beams, and each beam has an associated reference signal. The report triggering configuration defines one or more conditions that trigger a measurement report by the wireless device. In certain embodiments, each beam group may be associated to a beam group identifier. In certain embodiments, the one or more beams in each beam group may comprise one or more of: less than all beams in a cell; and beams from more than one cell. In certain embodiments, a beam group may be defined as one of: a set of reference signals independent of transmission resources; a set of transmission resources independent of reference signals; a combined set of reference signals and transmission resources; a group of beams sharing the same transmitted cell identifier; a group of beams sharing the same node identifier; and a group of beams sharing the same TRP.

In certain embodiments, the method may comprise configuring one or both of: one or more of an offset and a time to trigger that are specific to a particular beam group of the one or more beam groups; and one or more of an offset and a time to trigger that are specific to a particular beam.

In certain embodiments, the method may comprise sending a request for capability information to the wireless device, the capability information related to beam group-based measurement report triggering. The method may comprise receiving the requested capability information from the wireless device.

At step 908, the network node provides the measurement configuration to the wireless device. In certain embodiments, the method may comprise receiving a measurement report from the wireless device if one or more conditions that trigger a measurement report by the wireless device are satisfied. The measurement report may include any suitable information. As one example, the measurement report may include an identifier of a beam group that has triggered the measurement report by the wireless device. As another example, the measurement report may include one or more cell IDs associated to a beam group. As another example, the measurement report may include a measurement per beam for each beam in the beam group that has triggered the measurement report by the wireless device. The measurement per beam for each beam in the beam group that has triggered the measurement report by the wireless device may be L3 filtered and/or L1 filtered. As another example, the measurement report may include an aggregated value for the beam group that has triggered the measurement report by the wireless device. The aggregated value for the beam group may, for example, be an average of beam group quality (such as one or more of an average RSRP, an average RSRQ, and an average SINR). In some cases, the aggregated value for the beam group that has triggered the measurement report by wireless device 110A may be a linear average.

In certain embodiments, the method may comprise making handover decisions for the wireless device based on the received measurement report. In certain embodiments, the method may comprise aggregating performance information associated with the one or more beam groups. The performance information may comprise information about a number of successful handover attempts and a number of unsuccessful handover events.

FIGURE 10 illustrates an example optional management architecture, in accordance with certain embodiments. In the example of FIGURE 10, the node elements (NE) 1005A-B (e.g., gNBs or eNBs) are managed by a domain manager (DM) 1010 (also referred to as the OSS). A DM 1010 may further be managed by a network manager (NM) 1015. The two NEs 1005A-B are interfaced by X2 (or another suitable interface, depending on the RAT), whereas the interface between the two DMs 1010A-B is referred to as Itf-P2P. The management system may configure NEs 1005, as well as receive observations associated to features in NEs 1005. For example, in certain embodiments DM 1010A observes and configures NEs 1005A and 1005B, while NM 1015 observes and configures DMs 1010A and 1010B, as well as NEs 1005A and 1005B via DM 1010A. By means of configuration via DMs 1010A and 1010B, NM 1015 and related interfaces, functions over the interfaces (e.g., X2 and S1) may be carried out in a coordinated way throughout the RAN, eventually involving the Core Network (e.g., MME and S-GWs).

The beam groups and associated configurations described herein can be completely handled within the NEs 1005A and/or 1005B (e.g., gNBs, eNBs). In some embodiments, the beam groups may be configured in an Operation and Maintenance (OAM) system node (e.g., DM 1010A and/or DM 1010B) and provided to the NEs 1005A-B. The beam groups may be associated with information regarding how the different group configurations shall be used for different individuals, etc.

The OAM system node may also configure performance monitoring associated to the beam groups, such as what measurements that NEs 1005A-B shall aggregate and report. NEs 1005A-B may be configured to aggregate information about the performance associated to beam groups. For example, handover statistics may be aggregated per beam groups, such as successful and failed attempts, possibly separated per groups of individuals such as by speed, device type, subscription, or any other suitable criteria. As another example, NEs 1005A-B may be configured to determine an average of beam group quality.

FIGURE 11 is a block schematic of an exemplary base station, in accordance with certain embodiments. The example base station of FIGURE 11 may be configured to perform the methods for measurement report triggering for groups of reference signals described above with respect to FIGURES 1-10. The example base station of FIGURE 11 may be arranged with radio circuitry 1110 to communicate with served wireless devices, communication circuitry 1120 to communicate with other radio network and core network and OAM system nodes, memory 1130 to store information related to the various embodiments described herein, and a processing unit 1140.

Communication circuitry 1120 may be configured to receive information from the OAM system about beam groups, and also to provide performance monitoring information to the OAM system. Processing unit 1140 may be configured to decide suitable beam group configurations to be provided to a wireless device via radio circuitry 1110. Memory 1130 may be configured to store information about served wireless devices, as well as information about beam group configurations and report triggering configurations. Radio circuitry 1110 may be configured to communicate with served wireless devices, including configuring measurement reporting from such wireless devices, and receiving measurement reports.

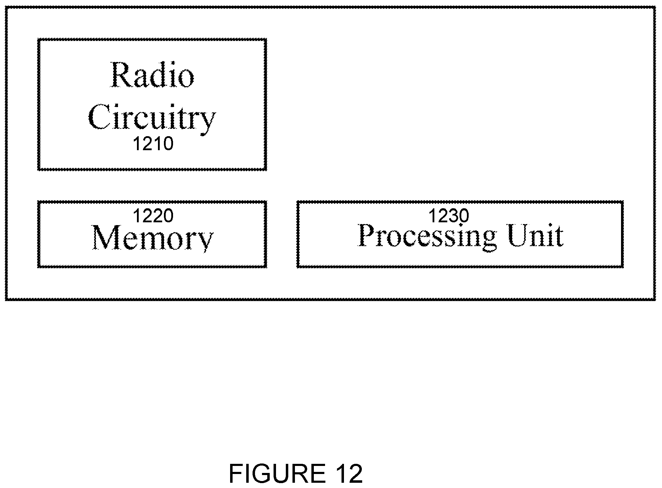

FIGURE 12 is a block schematic of an exemplary wireless device, in accordance with certain embodiments. The example wireless device of FIGURE 12 may be configured to perform the methods for measurement report triggering for groups of reference signals described above with respect to FIGURES 1-10. The example wireless device of FIGURE 12 may be arranged with radio circuitry 1210 to communicate with a network node (e.g., a serving base station), memory 1220 to store information related to the various embodiments described herein, and a processing unit 1230.

Radio circuitry 1210 may be configured to communicate with a network node (e.g., the serving base station), including receiving beam group report triggering configurations and sending measurement reports. Radio circuitry 1210 may also be configured to detect, monitor and measure beams, optionally restricted to provided search spaces or transmission resources. The measured information is provided to processing unit 1230 for further processing. Processing unit 1230 is configured to process the per beam measurements and to consider and evaluate beam group report triggering conditions. Processing unit 1230 may be split in layers, for example to process physical layer and layer 3 separately (as well as an intermediate layer 2). Memory 1220 may be configured to store information about beams and beam group report triggering configurations.

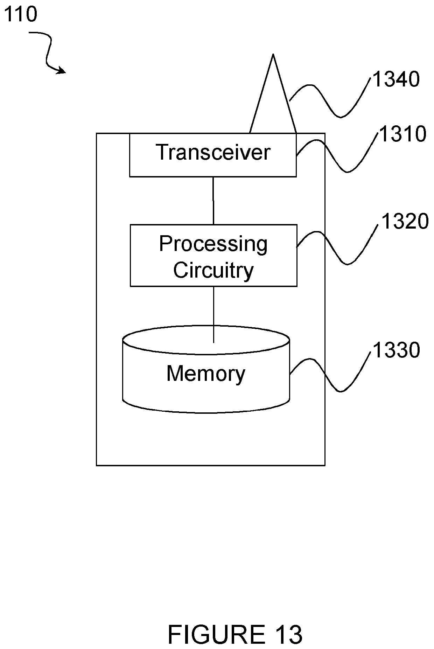

FIGURE 13 is a block schematic of an exemplary wireless device, in accordance with certain embodiments. Wireless device 110 may refer to any type of wireless device communicating with a node and/or with another wireless device in a cellular or mobile communication system. Examples of wireless device 110 include a mobile phone, a smart phone, a PDA (Personal Digital Assistant), a portable computer (e.g., laptop, tablet), a sensor, a modem, a machine-type-communication (MTC) device / machine-to-machine (M2M) device, laptop embedded equipment (LEE), laptop mounted equipment (LME), USB dongles, a D2D capable device, or another device that can provide wireless communication. A wireless device 110 may also be referred to as UE, a station (STA), a device, or a terminal in some embodiments. Wireless device 110 includes transceiver 1310, processing circuitry 1320, and memory 1330. In some embodiments, transceiver 1310 facilitates transmitting wireless signals to and receiving wireless signals from network node 115 (e.g., via antenna 1340), processing circuitry 1320 executes instructions to provide some or all of the functionality described above as being provided by wireless device 110, and memory 1330 stores the instructions executed by processing circuitry 1320.

Processing circuitry 1320 may include any suitable combination of hardware and software implemented in one or more modules to execute instructions and manipulate data to perform some or all of the described functions of wireless device 110, such as the functions of wireless device 110 described above in relation to FIGURES 1-12. In some embodiments, processing circuitry 1320 may include, for example, one or more computers, one or more central processing units (CPUs), one or more microprocessors, one or more applications, one or more application specific integrated circuits (ASICs), one or more field programmable gate arrays (FPGAs) and/or other logic.

Memory 1330 is generally operable to store instructions, such as a computer program, software, an application including one or more of logic, rules, algorithms, code, tables, etc. and/or other instructions capable of being executed by a processor. Examples of memory 1330 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information, data, and/or instructions that may be used by processor 1020.

Other embodiments of wireless device 110 may include additional components beyond those shown in FIGURE 13 that may be responsible for providing certain aspects of the wireless device's functionality, including any of the functionality described above and/or any additional functionality (including any functionality necessary to support the solution described above). As just one example, wireless device 110 may include input devices and circuits, output devices, and one or more synchronization units or circuits, which may be part of the processing circuitry 1320. Input devices include mechanisms for entry of data into wireless device 110. For example, input devices may include input mechanisms, such as a microphone, input elements, a display, etc. Output devices may include mechanisms for outputting data in audio, video and/or hard copy format. For example, output devices may include a speaker, a display, etc.

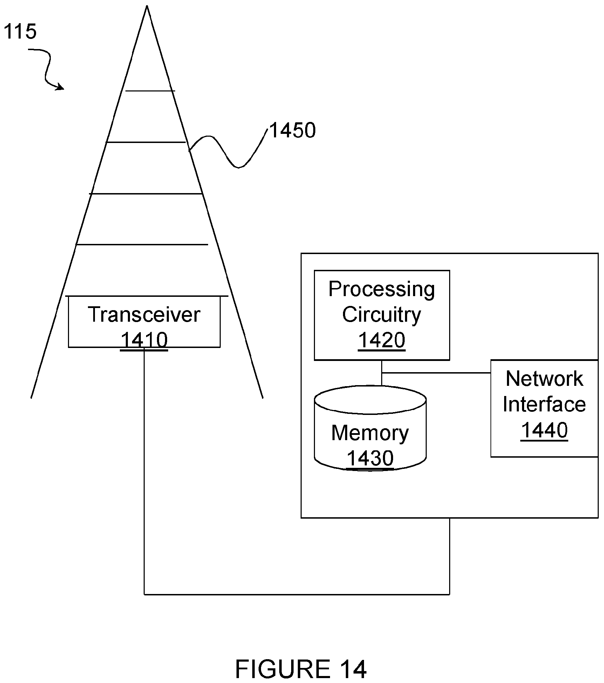

FIGURE 14 is a block schematic of an exemplary network node, in accordance with certain embodiments. Network node 115 may be any type of radio network node or any network node that communicates with a UE and/or with another network node. Examples of network node 115 include an eNodeB, a gNB, a node B, a base station, a wireless access point (e.g., a Wi-Fi access point), a low power node, a base transceiver station (BTS), relay, donor node controlling relay, transmission points, transmission nodes, remote RF unit (RRU), remote radio head (RRH), multi-standard radio (MSR) radio node such as MSR BS, nodes in distributed antenna system (DAS), O&M, OSS, SON, positioning node (e.g., E-SMLC), MDT, or any other suitable network node. Network nodes 115 may be deployed throughout network 100 as a homogenous deployment, heterogeneous deployment, or mixed deployment. A homogeneous deployment may generally describe a deployment made up of the same (or similar) type of network nodes 115 and/or similar coverage and cell sizes and inter-site distances. A heterogeneous deployment may generally describe deployments using a variety of types of network nodes 115 having different cell sizes, transmit powers, capacities, and inter-site distances. For example, a heterogeneous deployment may include a plurality of low-power nodes placed throughout a macro-cell layout. Mixed deployments may include a mix of homogenous portions and heterogeneous portions.

Network node 115 may include one or more of transceiver 1410, processing circuitry 1420, memory 1430, and network interface 1440. In some embodiments, transceiver 1410 facilitates transmitting wireless signals to and receiving wireless signals from wireless device 110 (e.g., via antenna 1450), processing circuitry 1420 executes instructions to provide some or all of the functionality described above as being provided by a network node 115, memory 1430 stores the instructions executed by processing circuitry 1420, and network interface 1440 communicates signals to backend network components, such as a gateway, switch, router, Internet, Public Switched Telephone Network (PSTN), core network nodes or radio network controllers 130, etc.

Processing circuitry 1420 may include any suitable combination of hardware and software implemented in one or more modules to execute instructions and manipulate data to perform some or all of the described functions of network node 115, such as those described above in relation to FIGURES 1-12 above. In some embodiments, processing circuitry 1420 may include, for example, one or more computers, one or more CPUs, one or more microprocessors, one or more applications, one or more ASICs, one or more FPGAs and/or other logic.

Memory 1430 is generally operable to store instructions, such as a computer program, software, an application including one or more of logic, rules, algorithms, code, tables, etc. and/or other instructions capable of being executed by a processor. Examples of memory 1430 include computer memory (for example, RAM or ROM), mass storage media (for example, a hard disk), removable storage media (for example, a CD or a DVD), and/or or any other volatile or non-volatile, non-transitory computer-readable and/or computer-executable memory devices that store information.

In some embodiments, network interface 1440 is communicatively coupled to processing circuitry 1420 and may refer to any suitable device operable to receive input for network node 115, send output from network node 115, perform suitable processing of the input or output or both, communicate to other devices, or any combination of the preceding. Network interface 1440 may include appropriate hardware (e.g., port, modem, network interface card, etc.) and software, including protocol conversion and data processing capabilities, to communicate through a network.

Other embodiments of network node 115 may include additional components beyond those shown in FIGURE 14 that may be responsible for providing certain aspects of the radio network node's functionality, including any of the functionality described above and/or any additional functionality (including any functionality necessary to support the solutions described above). The various different types of network nodes may include components having the same physical hardware but configured (e.g., via programming) to support different radio access technologies, or may represent partly or entirely different physical components.

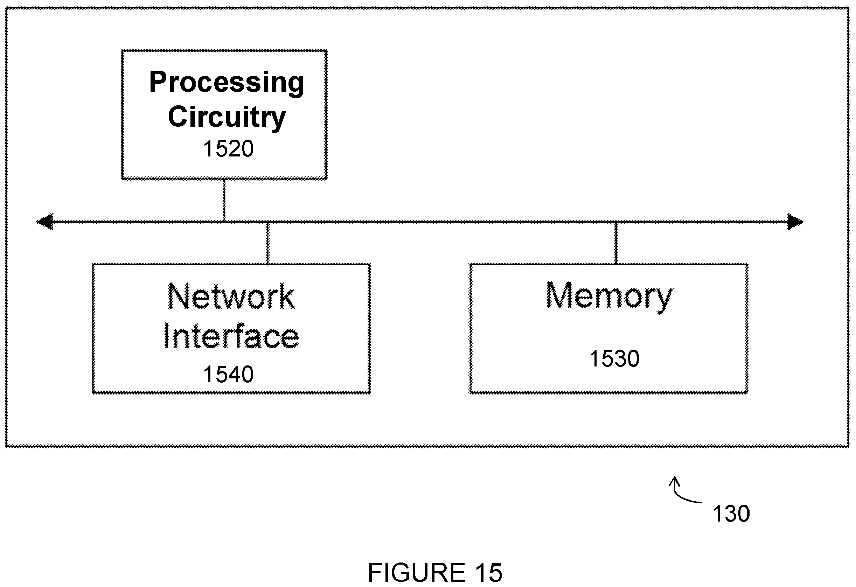

FIGURE 15 is a block schematic of an exemplary radio network controller or core network node 130, in accordance with certain embodiments. Examples of network nodes can include a mobile switching center (MSC), a serving GPRS support node (SGSN), a mobility management entity (MME), a radio network controller (RNC), a base station controller (BSC), and so on. The radio network controller or core network node 130 includes processing circuitry 1520, memory 1530, and network interface 1540. In some embodiments, processing circuitry 1520 executes instructions to provide some or all of the functionality described above as being provided by the network node, memory 1530 stores the instructions executed by processing circuitry 1520, and network interface 1540 communicates signals to any suitable node, such as a gateway, switch, router, Internet, Public Switched Telephone Network (PSTN), network nodes 115, radio network controllers or core network nodes 130, etc.

Processing circuitry 1520 may include any suitable combination of hardware and software implemented in one or more modules to execute instructions and manipulate data to perform some or all of the described functions of the radio network controller or core network node 130. In some embodiments, processing circuitry 1520 may include, for example, one or more computers, one or more CPUs, one or more microprocessors, one or more applications, one or more ASICs, one or more FPGAs and/or other logic.

Memory 1530 is generally operable to store instructions, such as a computer program, software, an application including one or more of logic, rules, algorithms, code, tables, etc. and/or other instructions capable of being executed by a processor. Examples of memory 1530 include computer memory (for example, RAM or ROM), mass storage media (for example, a hard disk), removable storage media (for example, a CD or a DVD), and/or or any other volatile or non-volatile, non-transitory computer-readable and/or computer-executable memory devices that store information.

In some embodiments, network interface 1540 is communicatively coupled to processing circuitry 1520 and may refer to any suitable device operable to receive input for the network node, send output from the network node, perform suitable processing of the input or output or both, communicate to other devices, or any combination of the preceding. Network interface 1540 may include appropriate hardware (e.g., port, modem, network interface card, etc.) and software, including protocol conversion and data processing capabilities, to communicate through a network.

Other embodiments of the network node may include additional components beyond those shown in FIGURE 15 that may be responsible for providing certain aspects of the network node's functionality, including any of the functionality described above and/or any additional functionality (including any functionality necessary to support the solution described above).

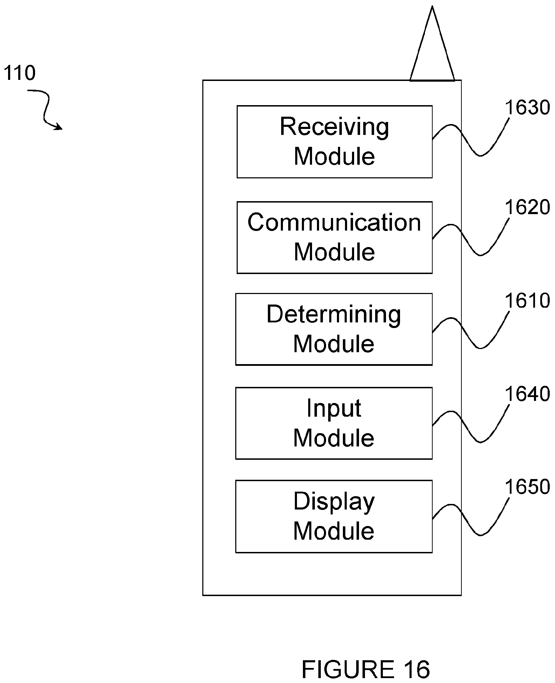

FIGURE 16 is a block schematic of an exemplary wireless device, in accordance with certain embodiments. Wireless device 110 may include one or more modules. For example, wireless device 110 may include a determining module 1610, a communication module 1620, a receiving module 1630, an input module 1640, a display module 1650, and any other suitable modules. In some embodiments, one or more of determining module 1610, communication module 1620, receiving module 1630, input module 1640, display module 1650 or any other suitable module may be implemented using one or more processors, such as processing circuitry 1320 described above in relation to FIGURE 13. In certain embodiments, the functions of two or more of the various modules may be combined into a single module. Wireless device 110 may perform the methods for measurement report triggering for groups of reference signals described above with respect to FIGURES 1-12.

Determining module 1610 may perform the processing functions of wireless device 110. For example, determining module 1610 may obtain a measurement configuration, the measurement configuration defining one or more beam groups and a report triggering configuration. As another example, determining module 1610 may perform one or more measurements on the associated reference signal of each beam of the one or more beams included in each of the one or more beam groups. As still another example, determining module 1610 may filter the performed one or more measurements to obtain a filtered measurement value for each of the one or more beam groups.

As yet another example, determining module 1610 may determine, based on at least one filtered measurement value, whether at least one of the one or more conditions that trigger a measurement report by wireless device 110 are satisfied. In certain embodiments, determining module 1610 may determine that at least one of the one or more conditions that trigger a measurement report by wireless device 110 are satisfied. In certain embodiments, determining module 1610 may determine that at least one of the one or more conditions that trigger a measurement report by wireless device 110 are not satisfied. In determining whether at least one of the one or more conditions that trigger a measurement report by wireless device 110 are satisfied, determining module 1610 may perform one or more comparisons. Determining module 1610 may compare a first filtered measurement value for a first beam group and a second filtered measurement value for a second beam group, wherein the first beam group comprises a plurality of beams at a serving node, and the second beam group comprises a plurality of beams at a candidate node. In certain embodiments, the first beam group may include beams from more than one node. In certain embodiments, the second beam group may include beams from more than one node. Determining module 1610 may compare the first beam group to a specific beam of the candidate node. Determining module 1610 may compare a specific beam of the serving node with the second beam group. Determining module 1610 may compare a third beam group with a fourth beam group, wherein the third beam group comprises one or more of: less than all beams in a first cell associated with the third beam group; and at least one beam from the first cell associated with the third beam group and at least one beam from a second cell associated with the third beam group; and the fourth beam group comprises all beams in a cell associated with the fourth beam group. In certain embodiments, determining module 1610 may determine whether at least one of the one or more conditions that trigger a measurement report by wireless devices 110 are satisfied based on one or both of: one or more of an offset and a time to trigger that are specific to a particular beam group of the one or more beam groups; and one or more of an offset and a time to trigger that are specific to a particular beam.

As an additional example, determining module 1610 may configure beam group report triggering. As another example, determining module 1610 may prepare one or more measurements for beam group-based report triggering. As still another example, determining module 1610 may evaluate measurement report triggering conditions in consideration of the beam measurements subject to beam group report triggering. As yet another example, determining module 1610 may configure a beam group and an associated report triggering configuration.

Determining module 1610 may include or be included in one or more processors, such as processing circuitry 1320 described above in relation to FIGURE 13. Determining module 1610 may include analog and/or digital circuitry configured to perform any of the functions of determining module 1610 and/or processing circuitry 1320 described above. The functions of determining module 1610 described above may, in certain embodiments, be performed in one or more distinct modules.

Communication module 1620 may perform the transmission functions of wireless device 110. For example, communication module 1620 may send a measurement report to a network node (e.g., when determining module 1610 determines that at least one of the one or more conditions that trigger a measurement report by wireless device 110 are satisfied). As another example, communication module 1620 may send capability information related to beam group-based measurement report triggering to the network node (e.g., in response to a request for capability information received by wireless device 110). Communication module 1620 may transmit messages to one or more of network nodes 115 of network 100. Communication module 1620 may include a transmitter and/or a transceiver, such as transceiver 1310 described above in relation to FIGURE 13. Communication module 1620 may include circuitry configured to wirelessly transmit messages and/or signals. In particular embodiments, communication module 1620 may receive messages and/or signals for transmission from determining module 1610. In certain embodiments, the functions of communication module 1620 described above may be performed in one or more distinct modules.

Receiving module 1630 may perform the receiving functions of wireless device 110. For example, receiving module 1630 may obtain a measurement configuration, the measurement configuration defining one or more beam groups and a report triggering configuration. As another example, receiving module 1630 may receive a request from a network node for capability information related to beam group-based measurement report triggering. Receiving module 1630 may include a receiver and/or a transceiver, such as transceiver 1310 described above in relation to FIGURE 13. Receiving module 1630 may include circuitry configured to wirelessly receive messages and/or signals. In particular embodiments, receiving module 1630 may communicate received messages and/or signals to determining module 1610. The functions of receiving module 1630 described above may, in certain embodiments, be performed in one or more distinct modules.

Input module 1640 may receive user input intended for wireless device 110. For example, the input module may receive key presses, button presses, touches, swipes, audio signals, video signals, and/or any other appropriate signals. The input module may include one or more keys, buttons, levers, switches, touchscreens, microphones, and/or cameras. The input module may communicate received signals to determining module 1610.

Display module 1650 may present signals on a display of wireless device 110. Display module 1650 may include the display and/or any appropriate circuitry and hardware configured to present signals on the display. Display module 1650 may receive signals to present on the display from determining module 1610.

Determining module 1610, communication module 1620, receiving module 1630, input module 1640, and display module 1650 may include any suitable configuration of hardware and/or software. Wireless device 110 may include additional modules beyond those shown in FIGURE 16 that may be responsible for providing any suitable functionality, including any of the functionality described above and/or any additional functionality (including any functionality necessary to support the various solutions described herein).

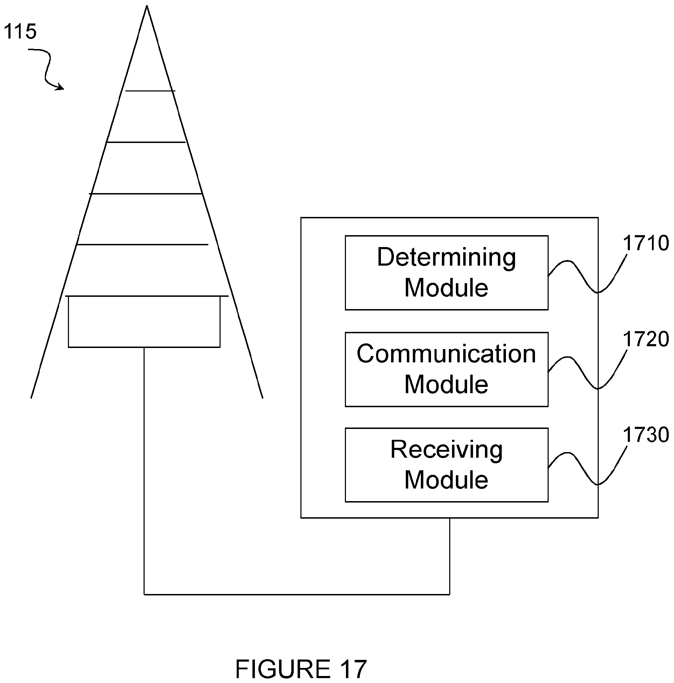

FIGURE 17 is a block schematic of an exemplary network node 115, in accordance with certain embodiments. Network node 115 may include one or more modules. For example, network node 115 may include determining module 1710, communication module 1720, receiving module 1730, and any other suitable modules. In some embodiments, one or more of determining module 1710, communication module 1720, receiving module 1730, or any other suitable module may be implemented using one or more processors, such as processing circuitry 1420 described above in relation to FIGURE 14. In certain embodiments, the functions of two or more of the various modules may be combined into a single module. Network node 115 may perform the methods for measurement report triggering for groups of reference signals described above with respect to FIGURES 1-12.

Determining module 1710 may perform the processing functions of network node 115. As one example, determining module 1710 may determine a measurement configuration for configuring a wireless device to perform measurement reporting based on beam-group filtering. As another example, determining module 1710 may configure a wireless device with a beam group filtering. As another example, determining module 1710 may make handover decisions for the wireless device based on the received measurement report. As another example, determining module 1710 may configure one or both of: one or more of an offset and a time to trigger that are specific to a particular beam group of the one or more beam groups; and one or more of an offset and a time to trigger that are specific to a particular beam. As still another example, determining module 1710 may aggregate performance information associated with the one or more beam groups.

As another example, determining module 1710 may obtain wireless device capability information associated to beam group filtering (e.g., by autonomously determining the UE capability associated to beam group filtering). As still another example, determining module 1710 may determine whether the wireless device supports beam group report triggering based on the obtained UE capability.

Determining module 1710 may include or be included in one or more processors, such as processing circuitry 1420 described above in relation to FIGURE 14. Determining module 1710 may include analog and/or digital circuitry configured to perform any of the functions of determining module 1710 and/or processing circuitry 1420 described above. The functions of determining module 1710 may, in certain embodiments, be performed in one or more distinct modules.

Communication module 1720 may perform the transmission functions of network node 115. As one example, communication module 1720 may provide the measurement configuration to the wireless device, the measurement configuration defining one or more beam groups and a report triggering configuration (e.g., by sending a measurement configuration message to the wireless device). As another example, communication module 1720 may send a request for capability information to the wireless device, the capability information related to beam group-based measurement report triggering. Communication module 1720 may transmit messages to one or more of wireless devices 110. Communication module 1720 may include a transmitter and/or a transceiver, such as transceiver 1410 described above in relation to FIGURE 14. Communication module 1720 may include circuitry configured to wirelessly transmit messages and/or signals. In particular embodiments, communication module 1720 may receive messages and/or signals for transmission from determining module 1710 or any other module. The functions of communication module 1720 may, in certain embodiments, be performed in one or more distinct modules.

Receiving module 1730 may perform the receiving functions of network node 115. For example, receiving module 1730 may receive a measurement report from the wireless device if one or more conditions that trigger a measurement report by the wireless device are satisfied. As another example, receiving module 1730 may receive capability information related to beam group filtering from a wireless device. Receiving module 1730 may receive any suitable information from a wireless device. Receiving module 1730 may include a receiver and/or a transceiver, such as transceiver 1410 described above in relation to FIGURE 14. Receiving module 1730 may include circuitry configured to wirelessly receive messages and/or signals. In particular embodiments, receiving module 1730 may communicate received messages and/or signals to determining module 1710 or any other suitable module. The functions of receiving module 1730 may, in certain embodiments, be performed in one or more distinct modules.

Determining module 1710, communication module 1720, and receiving module 1730 may include any suitable configuration of hardware and/or software. Network node 115 may include additional modules beyond those shown in FIGURE 17 that may be responsible for providing any suitable functionality, including any of the functionality described above and/or any additional functionality (including any functionality necessary to support the various solutions described herein).

Modifications, additions, or omissions may be made to the systems and apparatuses described herein without departing from the scope of the disclosure. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Abbreviations used in the preceding description include:

| | |
|---|---|
| 3GPP | 3rd Generation Partnership Project |
| AP | Access Point |
| AMM | Active Mode Mobility |
| ASIC | Application Specific Integrated Circuit |
| BS | Base Station |
| BSC | Base Station Controller |
| BTS | Base Transceiver Station |
| CD | Compact Disk |
| CIO | Cell Individual Offset |
| CPE | Customer Premises Equipment |
| CPU | Central Processing Unit |
| CRS | Cell Specific Reference Signal |
| CSI | Channel State Information |
| CSI-RS | Channel State Information Reference Signal |
| D2D | Device-to-device |
| DAS | Distributed Antenna System |

| DCI | Downlink Control Information |
|---|---|
| DL | Downlink |
| DM | Domain Manager |
| DMRS | Demodulation Reference Signal |
| DVD | Digital Video Disk |
| eNB | evolved Node B |
| E-SMLC | Evolved Serving Mobile Location Center |
| E-UTRA | Evolved Universal Terrestrial Radio Access |
| E-UTRAN | Evolved Universal Terrestrial Radio Access Network |
| FDD | Frequency Division Duplex |
| FPGA | Field Programmable Gate Array |
| HO | Handover |
| IE | Information Element |
| IoT | Internet of Things |
| IP | Internet Protocol |
| LAN | Local Area Network |
| LEE | Laptop Embedded Equipment |
| LME | Laptop Mounted Equipment |
| LOS | Line of Sight |
| LTE | Long Term Evolution |
| M2M | Machine-to-Machine |
| MAC | Medium Access Control |
| MAN | Metropolitan Area Network |
| MCE | Multi-cell/multicast Coordination Entity |
| MCS | Modulation level and coding scheme |
| MDT | Minimization of Drive Test |
| MME | Mobility Management Entity |
| MRS | Mobility Reference Signal |
| MSC | Mobile Switching Center |
| MSR | Multi-standard Radio |
| MTC | Machine-Type Communication |
| NAS | Non-Access Stratum |
| NB-IoT | Narrow band Internet of Things |
| NE | Network Elements |
| NM | Network Manager |
| NR | New Radio |
| O&M | Operations and Management |
| OSS | Operations Support System |
| PBCH | Physical Broadcast Channel |
| PSTN | Public Switched Telephone Network |
| RACH | Random Access Channel |
| RAM | Random Access Memory |
| RAN | Radio Access Network |
| RAT | Radio Access Technology |
| RNC | Radio Network Controller |
| ROM | Read-Only Memory |
| RRC | Radio Resource Control |
| RRH | Remote Radio Head |
| RRU | Remote Radio Unit |
| SON | Self-Organizing Network |
| SS | Synchronization Signal |
| SSB | Synchronization Signal/Physical Broadcast Channel Block |
| TA | Timing Advance |
| TDD | Time Division Duplex |
| TR | Transmission Resources |
| TRP | Transmission/Reception Point |
| TTT | Time to Trigger |
| UCI | Uplink Control Information |

| UE | User Equipment |
|---|---|
| UL | Uplink |
| WAN | Wide Area Network |
| WLAN | Wireless Local Area Network |

**Claims**

1. A method (800) in a wireless device (110), comprising:

receiving (701) a request from a network node (115) for capability information related to beam group-based measurement report triggering
sending (702) the requested capability information related to beam group-based measurement report triggering to the network node
obtaining (703, 804) from the network node a measurement configuration, the measurement configuration defining one or more beam groups (405A, 405B, 405C) and a report triggering configuration, wherein:

each of the one or more beam groups (405) comprises one or more beams (11, 12, 13, 21, 22, 23, 31, 32, 33), each beam having an associated reference signal, wherein the one or more beams in each beam group comprise one or more of:

less than all beams in a cell (125); and
beams from more than one cell; and

the report triggering configuration defines one or more conditions that trigger a measurement report by the wireless device;

performing (808) one or more measurements on the associated reference signal of each beam of the one or more beams included in each of the one or more beam groups;
filtering (812) the performed one or more measurements to obtain a filtered measurement value for each of the one or more beam groups; and
determining (816), based on at least one filtered measurement value, whether at least one of the one or more conditions that trigger a measurement report by the wireless device are satisfied.

2. The method of Claim 1, comprising:
upon determining (816) that at least one of the one or more conditions that trigger a measurement report by the wireless device are satisfied, sending (705) a measurement report to a network node.

3. The method of Claim 2, wherein the measurement report comprises one or more of:

one or more cell identifiers associated to a beam group;
an identifier of a beam group that has triggered the measurement report by the wireless device;
a measurement per beam for each beam in the beam group that has triggered the measurement report by the wireless device; and
an aggregated value for the beam group that has triggered the measurement report by the wireless device.

4. The method of any of Claims 1-3, wherein determining (816), based on at least one filtered measurement value, whether at least one of the one or more conditions that trigger a measurement report by the wireless device are satisfied comprises one or more of:

comparing a first filtered measurement value for a first beam group and a second filtered measurement value for a second beam group, wherein the first beam group comprises a plurality of beams at a serving node, and the second beam group comprises a plurality of beams at a candidate node;
comparing the first beam group to a specific beam of the candidate node;
comparing a specific beam of the serving node with the second beam group; and
comparing a third beam group with a fourth beam group, wherein:

the third beam group comprises one or more of:

23

less than all beams in a first cell associated with the third beam group; and
at least one beam from the first cell associated with the third beam group and at least one beam from a second cell associated with the third beam group; and

the fourth beam group comprises all beams in a cell associated with the fourth beam group.

5. A method (900) in a network node (115), comprising:

sending (701) a request for capability information to the wireless device, the capability information related to beam group-based measurement report triggering
receiving (702) the requested capability information from the wireless device
determining (904) a measurement configuration for configuring a wireless device (110) to perform measurement reporting based on beam-group filtering; and
providing (908) the measurement configuration to the wireless device, the measurement configuration defining one or more beam groups (405A, 405B, 405C)) and a report triggering configuration, wherein:

each of the one or more beam groups (405) comprises one or more beams (11, 12, 13, 21, 22, 23, 31, 32, 33), each beam having an associated reference signal, wherein the one or more beams in each beam group comprise one or more of:

less than all beams in a cell (125);
beams from more than one cell; and

the report triggering configuration defines one or more conditions that trigger a measurement report by the wireless device.

6. The method of Claim 5, comprising receiving (705) a measurement report from the wireless device if one or more conditions that trigger a measurement report by the wireless device are satisfied.

7. The method of Claim 6, wherein the measurement report comprises one or more of:

one or more cell identifiers associated to a beam group;
an identifier of a beam group that has triggered the measurement report by the wireless device;
a measurement per beam for each beam in the beam group that has triggered the measurement report by the wireless device; and
an aggregated value for the beam group that has triggered the measurement report by the wireless device.

8. The method of any of Claims 5-7, comprising aggregating performance information associated with the one or more beam groups.

9. A wireless device (110), operative to:
receive (701) a request from a network node (115) for capability information related to beam group-based measurement report triggering
send (702) the requested capability information related to beam group-based measurement report triggering to the network node
obtain (703, 804) from the network node a measurement configuration, the measurement configuration defining one or more beam groups (405A, 405B, 405C) and a report triggering configuration, wherein:

each of the one or more beam groups (405) comprises one or more beams (11, 12, 13, 21, 22, 23, 31, 32, 33), each beam having an associated reference signal, wherein the one or more beams in each beam group comprise one or more of:

less than all beams in a cell (125); and
beams from more than one cell; and

the report triggering configuration defines one or more conditions that trigger a measurement report by the wireless device;

perform (808) one or more measurements on the associated reference signal of each beam of the one or more beams included in each of the one or more beam groups;

filter (812) the performed one or more measurements to obtain a filtered measurement value for each of the one or more beam groups; and

determine (816), based on at least one filtered measurement value, whether at least one of the one or more conditions that trigger a measurement report by the wireless device are satisfied.

**10.** A network node (115), operative to:

send (701) a request for capability information to the wireless device, the capability information related to beam group-based measurement report triggering

receive (702) the requested capability information from the wireless device

determine (904) a measurement configuration for configuring a wireless device (110) to perform measurement reporting based on beam-group filtering; and

provide (908) the measurement configuration to the wireless device, the measurement configuration defining one or more beam groups (405A, 405B, 405C) and a report triggering configuration, wherein:

each of the one or more beam groups (405) comprises one or more beams (11, 12, 13, 21, 22, 23, 31, 32, 33), each beam having an associated reference signal, wherein the one or more beams in each beam group comprise one or more of:

less than all beams in a cell (125);
beams from more than one cell; and

the report triggering configuration defines one or more conditions that trigger a measurement report by the wireless device.

## Patentansprüche

**1.** Verfahren (800) in einem drahtlosen Gerät (110), umfassend:

Empfangen (701) einer Anforderung von einem Netzwerkknoten (115) von Fähigkeitsinformationen in Bezug auf ein strahlgruppenbasiertes Messberichtsauslösen,

Senden (702) der angeforderten Fähigkeitsinformationen in Bezug auf ein strahlgruppenbasiertes Messberichtsauslösen an den Netzwerkknoten,

Erhalten (703, 804), von dem Netzwerkknoten, einer Messkonfiguration, wobei die Messkonfiguration eine oder mehrere Strahlgruppen (405A, 405B, 405C) und eine Berichtsauslösekonfiguration definiert, wobei:

jede von der einen oder den mehreren Strahlgruppen (405) einen oder mehrere Strahlen (11, 12, 13, 21, 22, 23, 31, 32, 33) umfasst, wobei jeder Strahl ein verbundenes Referenzsignal aufweist, wobei der eine oder die mehreren Strahlen in jeder Strahlgruppe eines oder mehrere umfassen von:

weniger als allen Strahlen in einer Zelle (125) und
Strahlen aus mehr als einer Zelle; und

die Berichtsauslösekonfiguration eine oder mehrere Bedingungen definiert, die einen Messbericht durch das drahtlose Gerät auslösen;

Durchführen (808) von einer oder mehreren Messungen an dem verbundenen Referenzsignal jedes Strahls des einen oder der mehreren Strahlen, die in jeder von der einen oder den mehreren Strahlgruppen enthalten sind;

Filtern (812) der durchgeführten einen oder mehreren Messungen zum Erhalten eines gefilterten Messwerts für jede von der einen oder den mehreren Strahlgruppen und

Bestimmen (816), basierend auf mindestens einem gefilterten Messwert, ob mindestens eine von der einen oder den mehreren Bedingungen, die einen Messbericht durch das drahtlose Gerät auslösen, erfüllt ist.

**2.** Verfahren nach Anspruch 1, umfassend:

nach dem Bestimmen (816), dass mindestens eine von der einen oder den mehreren Bedingungen, die einen Messbericht durch das drahtlose Gerät auslösen, erfüllt ist, Senden (705) eines Messberichts an einen Netzwerkknoten.

**3.** Verfahren nach Anspruch 2, wobei der Messbericht eines oder mehrere umfasst von:

einem oder mehreren Zellidentifikatoren in Verbindung mit einer Strahlgruppe;
einem Identifikator einer Strahlgruppe, die den Messbericht durch das drahtlose Gerät ausgelöst hat;
einer Messung pro Strahl für jeden Strahl in der Strahlgruppe, die den Messbericht durch das drahtlose Gerät ausgelöst hat; und
einem aggregierten Wert für die Strahlgruppe, die den Messbericht durch das drahtlose Gerät ausgelöst hat.

**4.** Verfahren nach einem der Ansprüche 1-3, wobei das Bestimmen (816), basierend auf mindestens einem gefilterten Messwert, ob mindestens eine von der einen oder den mehreren Bedingungen, die einen Messbericht durch das drahtlose Gerät auslösen, erfüllt ist, eines oder mehrere umfasst von:

Vergleichen eines ersten gefilterten Messwerts für eine erste Strahlgruppe und eines zweiten gefilterten Messwerts für eine zweite Strahlgruppe, wobei die erste Strahlgruppe eine Vielzahl von Strahlen an einem bedienenden Knoten umfasst und die zweite Strahlgruppe eine Vielzahl von Strahlen an einem Kandidatenknoten umfasst;
Vergleichen der ersten Strahlgruppe mit einem spezifischen Strahl des Kandidatenknotens;
Vergleichen eines spezifischen Strahls des bedienenden Knoten mit der zweiten Strahlgruppe und
Vergleichen einer dritten Strahlgruppe mit einer vierten Strahlgruppe, wobei:
die dritte Strahlgruppe eines oder mehrere umfasst von:

weniger als allen Strahlen in einer ersten Zelle in Verbindung mit der dritten Strahlgruppe und
mindestens einen Strahl aus der ersten Zelle in Verbindung mit der dritten Strahlgruppe und mindestens einen Strahl aus einer zweiten Zelle in Verbindung mit der dritten Strahlgruppe; und
die vierte Strahlgruppe alle Strahlen in einer Zelle in Verbindung mit der vierten Strahlgruppe umfasst.

**5.** Verfahren (900) in einem Netzwerkknoten (115), umfassend:

Senden (701) einer Anforderung von Fähigkeitsinformationen an das drahtlose Gerät, wobei sich die Fähigkeitsinformationen auf ein strahlgruppenbasiertes Messberichtsauslösen beziehen,
Empfangen (702) der angeforderten Fähigkeitsinformationen von dem drahtlosen Gerät,
Bestimmen (904) einer Messkonfiguration zum Konfigurieren eines drahtlosen Geräts (110) zum Durchführen einer Messberichterstattung basierend auf einem Strahlgruppenfiltern und
Bereitstellen (908) der Messkonfiguration an das drahtlose Gerät, wobei die Messkonfiguration eine oder mehrere Strahlgruppen (405A, 405B, 405C) und eine Berichtsauslösekonfiguration definiert, wobei:
jede von der einen oder den mehreren Strahlgruppen (405) einen oder mehrere Strahlen (11, 12, 13, 21, 22, 23, 31, 32, 33) umfasst, wobei jeder Strahl ein verbundenes Referenzsignal aufweist, wobei der eine oder die mehreren Strahlen in jeder Strahlgruppe eines oder mehrere umfassen von:

weniger als allen Strahlen in einer Zelle (125);
Strahlen aus mehr als einer Zelle; und
die Berichtsauslösekonfiguration eine oder mehrere Bedingungen definiert, die einen Messbericht durch das drahtlose Gerät auslösen.

**6.** Verfahren nach Anspruch 5, umfassend ein Empfangen (705) eines Messberichts von dem drahtlosen Gerät, wenn eine oder mehrere Bedingungen, die einen Messbericht durch das drahtlose Gerät auslösen, erfüllt sind.

**7.** Verfahren nach Anspruch 6, wobei der Messbericht eines oder mehrere umfasst von:

einem oder mehreren Zellidentifikatoren in Verbindung mit einer Strahlgruppe;
einem Identifikator einer Strahlgruppe, die den Messbericht durch das drahtlose Gerät ausgelöst hat;
einer Messung pro Strahl für jeden Strahl in der Strahlgruppe, die den Messbericht durch das drahtlose Gerät ausgelöst hat; und
einem aggregierten Wert für die Strahlgruppe, die den Messbericht durch das drahtlose Gerät ausgelöst hat.

**8.** Verfahren nach einem der Ansprüche 5-7, umfassend ein Aggregieren von Leistungsinformationen in Verbindung mit der einen oder den mehreren Strahlgruppen.

**EP 3 536 024 B1**

9. Drahtloses Gerät (110), das betreibbar ist zum:

Empfangen (701) einer Anforderung von einem Netzwerkknoten (115) von Fähigkeitsinformationen in Bezug auf ein strahlgruppenbasiertes Messberichtsauslösen,
Senden (702) der angeforderten Fähigkeitsinformationen in Bezug auf ein strahlgruppenbasiertes Messberichtsauslösen an den Netzwerkknoten,
Erhalten (703, 804), von dem Netzwerkknoten, einer Messkonfiguration, wobei die Messkonfiguration eine oder mehrere Strahlgruppen (405A, 405B, 405C) und eine Berichtsauslösekonfiguration definiert, wobei:
jede von der einen oder den mehreren Strahlgruppen (405) einen oder mehrere Strahlen (11, 12, 13, 21, 22, 23, 31, 32, 33) umfasst, wobei jeder Strahl ein verbundenes Referenzsignal aufweist, wobei der eine oder die mehreren Strahlen in jeder Strahlgruppe eines oder mehrere umfassen von:

weniger als allen Strahlen in einer Zelle (125) und
Strahlen aus mehr als einer Zelle; und
die Berichtsauslösekonfiguration eine oder mehrere Bedingungen definiert, die einen Messbericht durch das drahtlose Gerät auslösen;
Durchführen (808) von einer oder mehreren Messungen an dem verbundenen Referenzsignal jedes Strahls des einen oder der mehreren Strahlen, die in jeder von der einen oder den mehreren Strahlgruppen enthalten sind;
Filtern (812) der durchgeführten einen oder mehreren Messungen zum Erhalten eines gefilterten Messwerts für jede von der einen oder den mehreren Strahlgruppen und
Bestimmen (816), basierend auf mindestens einem gefilterten Messwert, ob mindestens eine von der einen oder den mehreren Bedingungen, die einen Messbericht durch das drahtlose Gerät auslösen, erfüllt ist.

10. Netzwerkknoten (115), der betreibbar ist zum:

Senden (701) einer Anforderung von Fähigkeitsinformationen an das drahtlose Gerät, wobei sich die Fähigkeitsinformationen auf ein strahlgruppenbasiertes Messberichtsauslösen beziehen,
Empfangen (702) der angeforderten Fähigkeitsinformationen von dem drahtlosen Gerät,
Bestimmen (904) einer Messkonfiguration zum Konfigurieren eines drahtlosen Geräts (110) zum Durchführen einer Messberichterstattung basierend auf einem Strahlgruppenfiltern und
Bereitstellen (908) der Messkonfiguration an das drahtlose Gerät, wobei die Messkonfiguration eine oder mehrere Strahlgruppen (405A, 405B, 405C) und eine Berichtsauslösekonfiguration definiert, wobei:
jede von der einen oder den mehreren Strahlgruppen (405) einen oder mehrere Strahlen (11, 12, 13, 21, 22, 23, 31, 32, 33) umfasst, wobei jeder Strahl ein verbundenes Referenzsignal aufweist, wobei der eine oder die mehreren Strahlen in jeder Strahlgruppe eines oder mehrere umfassen von:

weniger als allen Strahlen in einer Zelle (125);
Strahlen aus mehr als einer Zelle; und
die Berichtsauslösekonfiguration eine oder mehrere Bedingungen definiert, die einen Messbericht durch das drahtlose Gerät auslösen.

**Revendications**

1. Procédé (800) dans un dispositif sans fil (110), comprenant :

la réception (701) d'une demande à partir d'un nœud de réseau (115) pour des informations de capacité liées au déclenchement de rapport de mesure sur la base de groupes de faisceaux
l'envoi (702) des informations de capacité liées au déclenchement de rapport de mesure sur la base de groupes de faisceaux demandées au nœud de réseau
l'obtention (703, 804) à partir du nœud de réseau d'une configuration de mesure, la configuration de mesure définissant un ou plusieurs groupes de faisceaux (405A, 405B, 405C) et une configuration de déclenchement de rapport, dans lequel :
chacun des un ou plusieurs groupes de faisceaux (405) comprend un ou plusieurs faisceaux (11, 12, 13, 21, 22, 23, 31, 32, 33), chaque faisceau ayant un signal de référence associé, dans lequel les un ou plusieurs faisceaux dans chaque groupe de faisceaux comprennent un ou plusieurs parmi :

moins que tous les faisceaux dans une cellule (125) ; et

des faisceaux provenant de plus d'une cellule ; et

la configuration de déclenchement de rapport définit une ou plusieurs conditions qui déclenchent un rapport de mesure par le dispositif sans fil ;

l'exécution (808) d'une ou plusieurs mesures sur le signal de référence associé à chaque faisceau parmi les un ou plusieurs faisceaux inclus dans chacun des un ou plusieurs groupes de faisceaux ;

le filtrage (812) des une ou plusieurs mesures effectuées pour obtenir une valeur de mesure filtrée pour chacun des un ou plusieurs groupes de faisceaux ; et

la détermination (816), sur la base d'au moins une valeur de mesure filtrée, si au moins une parmi les une ou plusieurs conditions qui déclenchent un rapport de mesure par le dispositif sans fil est satisfaite.

**2.** Procédé selon la revendication 1, comprenant :
lors de la détermination (816) qu'au moins une parmi les une ou plusieurs conditions qui déclenchent un rapport de mesure par le dispositif sans fil est satisfaite, l'envoi (705) d'un rapport de mesure à un nœud de réseau.

**3.** Procédé selon la revendication 2, dans lequel le rapport de mesure comprend un ou plusieurs parmi :

un ou plusieurs identificateurs de cellule associés à un groupe de faisceaux ;

un identificateur d'un groupe de faisceaux qui a déclenché le rapport de mesure par le dispositif sans fil ;

une mesure par faisceau pour chaque faisceau dans le groupe de faisceaux qui a déclenché le rapport de mesure par le dispositif sans fil ; et

une valeur agrégée pour le groupe de faisceaux qui a déclenché le rapport de mesure par le dispositif sans fil.

**4.** Procédé selon l'une quelconque des revendications 1-3, dans lequel la détermination (816), sur la base d'au moins une valeur de mesure filtrée, si au moins une parmi les une ou plusieurs conditions qui déclenchent un rapport de mesure par le dispositif sans fil est satisfaite comprend une ou plusieurs parmi :

la comparaison d'une première valeur de mesure filtré pour un premier groupe de faisceaux et d'une seconde valeur de mesure filtrée pour un deuxième groupe de faisceaux, dans lequel le premier groupe de faisceaux comprend une pluralité de faisceaux au niveau d'un nœud de desserte et le deuxième groupe de faisceaux comprend une pluralité de faisceaux au niveau d'un nœud candidat ;

la comparaison du premier groupe de faisceaux à un faisceau spécifique du nœud candidat ;

la comparaison d'un faisceau spécifique du nœud de desserte avec le deuxième groupe de faisceaux ; et

la comparaison d'un troisième groupe de faisceaux avec un quatrième groupe de faisceaux, dans lequel :

le troisième groupe de faisceau comprend un ou plusieurs parmi :

moins que tous les faisceaux dans une première cellule associée au troisième groupe de faisceaux ; et

au moins un faisceau provenant de la première cellule associée au troisième groupe de faisceaux et au moins un faisceau provenant d'une seconde cellule associée au troisième groupe de faisceaux ; et

le quatrième groupe de faisceau comprend tous les faisceaux dans une cellule associée au quatrième groupe de faisceaux.

**5.** Procédé (900) dans un nœud de réseau (115), comprenant :

l'envoi (701) d'une demande pour des informations de capacité au dispositif sans fil, les informations de capacité étant liées au déclenchement de rapport de mesure sur la base de groupes de faisceaux

la réception (702) des informations de capacité demandées à partir du dispositif sans fil

la détermination (904) d'une configuration de mesure pour configurer un dispositif sans fil (110) pour effectuer un rapport de mesure sur la base d'un filtrage de groupes de faisceaux ; et

la fourniture (908) de la configuration de mesure au dispositif sans fil, la configuration de mesure définissant un ou plusieurs groupes de faisceaux (405A, 405B, 405C) et une configuration de déclenchement de rapport, dans lequel :

chacun des un ou plusieurs groupes de faisceaux (405) comprend un ou plusieurs faisceaux (11, 12, 13, 21, 22, 23, 31, 32, 33), chaque faisceau ayant un signal de référence associé, dans lequel les un ou plusieurs faisceaux dans chaque groupe de faisceaux comprennent un ou plusieurs parmi :

moins que tous les faisceaux dans une cellule (125) ;

des faisceaux provenant de plus d'une cellule ; et

la configuration de déclenchement de rapport définit une ou plusieurs conditions qui déclenchent un rapport de mesure par le dispositif sans fil.

**6.** Procédé selon la revendication 5, comprenant la réception (705) d'un rapport de mesure à partir du dispositif sans fil si une ou plusieurs conditions qui déclenchent un rapport de mesure par le dispositif sans fil sont satisfaites.

**7.** Procédé selon la revendication 6, dans lequel le rapport de mesure comprend un ou plusieurs parmi :

un ou plusieurs identificateurs de cellule associés à un groupe de faisceaux ;
un identificateur d'un groupe de faisceaux qui a déclenché le rapport de mesure par le dispositif sans fil ;
une mesure par faisceau pour chaque faisceau dans le groupe de faisceaux qui a déclenché le rapport de mesure par le dispositif sans fil ; et
une valeur agrégée pour le groupe de faisceaux qui a déclenché le rapport de mesure par le dispositif sans fil.

**8.** Procédé selon l'une quelconque des revendications 5-7, comprenant l'agrégation d'informations de performance associées aux un ou plusieurs groupes de faisceaux.

**9.** Dispositif sans fil (110) utilisable pour :

recevoir (701) une demande à partir d'un nœud de réseau (115) pour des informations de capacité liées au déclenchement de rapport de mesure sur la base de groupes de faisceaux
envoyer (702) les informations de capacité liées au déclenchement de rapport de mesure sur la base de groupes de faisceaux demandées au nœud de réseau
obtenir (703, 804) à partir du nœud de réseau une configuration de mesure, la configuration de mesure définissant un ou plusieurs groupes de faisceaux (405A, 405B, 405C) et une configuration de déclenchement de rapport, dans lequel :
chacun des un ou plusieurs groupes de faisceaux (405) comprend un ou plusieurs faisceaux (11, 12, 13, 21, 22, 23, 31, 32, 33), chaque faisceau ayant un signal de référence associé, dans lequel les un ou plusieurs faisceaux dans chaque groupe de faisceaux comprennent un ou plusieurs parmi :

moins que tous les faisceaux dans une cellule (125) ; et
des faisceaux provenant de plus d'une cellule ; et
la configuration de déclenchement de rapport définit une ou plusieurs conditions qui déclenchent un rapport de mesure par le dispositif sans fil ;
effectuer (808) une ou plusieurs mesures sur le signal de référence associé à chaque faisceau parmi les un ou plusieurs faisceaux inclus dans chacun des un ou plusieurs groupes de faisceaux ;
filtrer (812) les une ou plusieurs mesures effectuées pour obtenir une valeur de mesure filtrée pour chacun des un ou plusieurs groupes de faisceaux ; et
déterminer (816), sur la base d'au moins une valeur de mesure filtrée, si au moins une parmi les une ou plusieurs conditions qui déclenchent un rapport de mesure par le dispositif sans fil est satisfaite.

**10.** Nœud de réseau (115) utilisable pour :

envoyer (701) une demande pour des informations de capacité au dispositif sans fil, les informations de capacité étant liées au déclenchement de rapport de mesure sur la base de groupes de faisceaux
recevoir (702) les informations de capacité demandées à partir du dispositif sans fil
déterminer (904) une configuration de mesure pour configurer un dispositif sans fil (110) pour effectuer un rapport de mesure sur la base d'un filtrage de groupes de faisceaux; et
fournir (908) la configuration de mesure au dispositif sans fil, la configuration de mesure définissant un ou plusieurs groupes de faisceaux (405A, 405B, 405C) et une configuration de déclenchement de rapport, dans lequel :
chacun des un ou plusieurs groupes de faisceaux (405) comprend un ou plusieurs faisceaux (11, 12, 13, 21, 22, 23, 31, 32, 33), chaque faisceau ayant un signal de référence associé, dans lequel les un ou plusieurs faisceaux dans chaque groupe de faisceaux comprennent un ou plusieurs parmi :

moins que tous les faisceaux dans une cellule (125) ;
des faisceaux provenant de plus d'une cellule ; et
la configuration de déclenchement de rapport définit une ou plusieurs conditions qui déclenchent un rapport de mesure par le dispositif sans fil.

FIGURE 1

FIGURE 2

FIGURE 3

FIGURE 4

FIGURE 5

EP 3 536 024 B1

FIGURE 6

gNB2 115I

Coverage area of gNB2 125I

605

610A

610B

610C

615

'X' dB CIO (Cell Individual Offset) region while moving from gNB2 towards gNB1

gNB1 115J

Coverage area of gNB1 125J

FIGURE 7

EP 3 536 024 B1

800

```
                              ┌─────────────┐
                              │    Start    │
                              └─────────────┘
                                     │
                                     ▼
804  ┌──────────────────────────────────────────────────────────────────┐
     │           Obtain a measurement configuration.                    │
     └──────────────────────────────────────────────────────────────────┘
                                     │
                                     ▼
808  ┌──────────────────────────────────────────────────────────────────┐
     │           Perform one or more measurements.                      │
     └──────────────────────────────────────────────────────────────────┘
                                     │
                                     ▼
812  ┌──────────────────────────────────────────────────────────────────┐
     │  Filter the performed one or more measurements to obtain a       │
     │  filtered measurement value.                                     │
     └──────────────────────────────────────────────────────────────────┘
                                     │
                                     ▼
816  ┌──────────────────────────────────────────────────────────────────┐
     │  Determine whether at least one of the one or more conditions    │
     │  that trigger a measurement report by the wireless device are    │
     │  satisfied.                                                      │
     └──────────────────────────────────────────────────────────────────┘
                                     │
                                     ▼
                              ┌─────────────┐
                              │     End     │
                              └─────────────┘
```

FIGURE 8

900

Start

904 Determine a measurement configuration for configuring a wireless device.

908 Provide the measurement configuration to the wireless device.

End

FIGURE 9

FIGURE 10

| Radio Circuitry 1110 | Communication circuitry 1120 |
|---|---|
| 1130 Memory | 1140 Processing Unit |

FIGURE 11

Radio Circuitry 1210

1220 Memory

1230 Processing Unit

FIGURE 12

FIGURE 13

EP 3 536 024 B1

115

1450

Transceiver
1410

Processing
Circuitry
1420

Network
Interface
1440

Memory
1430

FIGURE 14

EP 3 536 024 B1

Processing
Circuitry
1520

Network
Interface
1540

Memory

1530

130

FIGURE 15

110

Receiving
Module — 1630

Communication
Module — 1620

Determining
Module — 1610

Input
Module — 1640

Display
Module — 1650

FIGURE 16

FIGURE 17

EP 3 536 024 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016085266 A

**Non-patent literature cited in the description**

- Technical Specification, 3rd Generation Partnership Project; Technical Specification Group Radio Access Network; Evolved Universal Terrestrial Radio Access (E-UTRA); Radio Resource Control (RRC); Protocol specification (Release 14). *3rd Generation Partnership Project (3GPP) Technical Specification (TS) 36.331 v14.0.0,* September 2016